(19) Europäisches Patentamt
European Patent Office
Office européen des brevets

(11) EP 4 715 253 A1

(12) EUROPEAN PATENT APPLICATION
published in accordance with Art. 153(4) EPC

(43) Date of publication:
25.03.2026 Bulletin 2026/13

(21) Application number: 24807547.5

(22) Date of filing: 14.05.2024

(51) International Patent Classification (IPC):
*F21S 43/20* (2018.01)   *F21S 43/14* (2018.01)
*F21V 11/00* (2015.01)   *H05B 33/14* (2006.01)
*H05B 33/20* (2006.01)   *G02B 5/00* (2006.01)
*F21Y 115/10* (2016.01)

(52) Cooperative Patent Classification (CPC):
**F21S 43/14; F21S 43/20; F21V 11/00; G02B 5/00;**
**H05B 33/14; H05B 33/20;** F21Y 2115/10

(86) International application number:
**PCT/KR2024/006601**

(87) International publication number:
**WO 2024/237676 (21.11.2024 Gazette 2024/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.05.2023 KR 20230062407**

(71) Applicant: **LG INNOTEK CO. LTD**
**Gangseo-gu**
**Seoul 07796 (KR)**

(72) Inventors:
• **KIM, Jin Su**
  **Seoul 07796 (KR)**
• **KANG, Se Eun**
  **Seoul 07796 (KR)**
• **LIM, Dong Hyun**
  **Seoul 07796 (KR)**

(74) Representative: **Plasseraud IP**
**104 Rue de Richelieu**
**CS92104**
**75080 Paris Cedex 02 (FR)**

(54) **OPTICAL PLATE, LIGHTING DEVICE, AND VEHICLE LAMP**

(57) A lighting device disclosed in an embodiment of the invention may comprises a substrate; a plurality of light emitting devices on the substrate; a resin layer covering the light emitting devices on the substrate; an optical film on the resin layer; and a plurality of light-blocking members disposed on an upper or lower surface of the optical film and vertically overlapping each of the light emitting devices. The light-blocking members include a first light-blocking portion having a first pattern of a first thickness, a second light-blocking portion having a second pattern of a second thickness greater than the first thickness, and a third light-blocking portion having a third pattern of a third thickness greater than the second thickness, wherein the first, second, and third light-blocking portions vertically overlap with the upper surfaces of each light emitting devices. The first pattern of the first light-blocking portion has a size larger than other regions around the second and third light-blocking portions, the second pattern of the second light-blocking portion has a size larger than other regions on both sides of the third light-blocking portion, and the third pattern of the third light-blocking portion may have a single size.

【FIG. 5】

**Description**

[Technical Field]

An embodiment of the invention relates to an optical plate having a light-blocking pattern, a lighting device having the same, and a vehicle lamp. An embodiment of the invention relates to a method for manufacturing a lighting device having a light-blocking pattern.

[Background Art]

Lighting applications include vehicle lights as well as backlights for displays and signs. Light emitting device, such as light emitting diode (LED), have advantages such as low power consumption, semi-permanent life, fast response speed, safety, and environmental friendliness compared to conventional light sources such as fluorescent lamps and incandescent lamps. These light emitting diodes are applied to various display devices, various lighting devices such as indoor or outdoor lights. A lamp employing a light emitting diode as a vehicle light source has been proposed. Compared with incandescent lamps, light emitting diodes are advantageous in that power consumption is small. However, since an emission angle of light emitted from the light emitting diode is small, when the light emitting diode is used as a vehicle lamp, there is a demand for increasing the light emitting area of the lamp using the light emitting diode. Since the light emitting diode is small, it may increase the design freedom of the lamp, and it is economical due to its semi-permanent life.

[Disclosure]

[Technical Problem]

An embodiment of the invention may provide an optical plate having a light-blocking pattern that blocks some of the light emitted from a light emitting device, and a lighting device having the same. An embodiment of the invention may provide a method for manufacturing an optical plate and a lighting device having a light-blocking pattern in which the light-blocking pattern has different thicknesses in each region using an inkjet printing process. An embodiment of the invention may provide a lighting device and a vehicle lamp that can improve the pattern uniformity of a light-blocking member disposed on a light emitting device.

[Technical Solution]

An optical plate according to an embodiment of the invention may comprise an optical film having a diffuser; and a light-blocking member disposed on an upper or lower surface of the optical film, wherein the light-blocking member includes a first light-blocking portion having a first pattern with a first thickness in a vertical direction, a second light-blocking portion having a second pattern with a second thickness thicker than the first thickness, and a third light-blocking portion having a third pattern with a third thickness thicker than the second thickness, wherein the first to third light-blocking portions do not overlap each other in the vertical direction, the first pattern of the first light blocking portion has patterns of the largest size within the first pattern arranged around the second and third light blocking portions, the second pattern of the second light blocking portion has patterns of the largest size within the second pattern arranged on both sides of the third light blocking portion in the first direction, the third pattern of the third light blocking portion has a single size pattern adjacent to one side of the light blocking member, an upper surface area of a region connecting outer lines of the first patterns of the first light-blocking portion is A1, and an upper or lower surface area of a region connecting outer lines of the second patterns of the second light-blocking portion is A2, and a lower surface area of the third light-blocking portion is A3, and the following conditions satisfy: condition 1: A3 < A2 < A1 and condition 2: 1 < A2/A3 < 1.7. According to an embodiment of the invention, condition 3 may satisfy: 2 < A1/A3 < 6. In addition, condition 4 may satisfy: 2 < A1/A2 < 4.5.

According to an embodiment of the invention, the light-blocking member may include: a first edge having a long length in a second direction perpendicular to the first direction; a third edge located on an opposite side of the first edge and having the first patterns arranged in the second direction; and a second edge having the first patterns arranged in a shape that protrudes convexly in both directions from both ends of the first edge and both ends of the third edge. According to an embodiment of the invention, the optical plate includes a first protrusion and a second protrusion that protrude on the second edge and spaced apart from each other, and each of the first protrusion and the second protrusion may have the first patterns arranged in the second direction.

According to an embodiment of the invention, each of the first and second protrusions may have six or less first patterns arranged in the second direction. According to an embodiment of the invention, the second light-blocking portion includes a rear region arranged between the first edge of the first light-blocking portion and the third light-blocking portion, corner regions arranged at both front corners of the third light-blocking portion, and a front region arranged in front of the third light-blocking portion, and the rear region may be arranged in a longitudinal direction along one side or the rear surface of the third light-blocking portion, and the front region may be disposed in a longitudinal direction along the other side or the front surface of the third light-blocking portion.

According to an embodiment of the invention, an outer side surface of the second light-blocking portion may be in contact with the first light-blocking portion, and an outer side surface of the third light-blocking portion may be in contact with the first and second light-blocking portions. The third thickness may be in a range of 2.5 to 5 times the first thickness, and the third thickness may be in a range of 100 $\mu$m to 200 $\mu$m.

A lighting device according to an embodiment of the invention includes: a substrate; a plurality of light emitting devices disposed on the substrate and electrically connected to the substrate; a resin layer covering the plurality of light emitting devices on the substrate; an optical film disposed on the resin layer; and a plurality of light-blocking members disposed on an upper or lower surface of the optical film and at least a portion of which vertically overlaps each of the plurality of light emitting devices, each of the plurality of light emitting devices having a emission surface on one side that emits light in a first direction, each of the plurality of light-blocking members including a first light-blocking portion having a first pattern of a first thickness, a second light-blocking portion having a second pattern of a second thickness greater than the first thickness, and a third light-blocking portion having a third pattern of a third thickness greater than the second thickness, wherein the first to third light-blocking portions vertically overlap with upper surfaces of the light emitting devices, the first pattern of the first light-blocking portion has a pattern of the largest size within the first pattern arranged around the second and third light-blocking portions, the second pattern of the second light-blocking portion has a pattern of the largest size within the second pattern arranged on both sides of the third light-blocking portion in the first direction, and the third pattern of the third light-blocking portion has a single size pattern having a length longer than the length of each of the light emitting devices in a second direction, and an upper surface area of each of the light emitting devices A00, and a lower surface area of the first light-blocking portion that vertically overlaps with the upper surface of each light emitting device is A01, a lower surface area of the second light-blocking portion that vertically overlaps with the upper surface of each light emitting device is A02, and a lower surface area of the third light-blocking portion that vertically overlaps with the upper surface of each light emitting device is A03, and the following conditions may satisfy condition 1: A03 < A02 < A01 < A00, condition 2: 0.1 < A03/A00 $\leq$ 0.2, and condition 3: 0.2 < A02/A00 < 0.3.

The lighting device of the invention may satisfy: condition 4: 0.6 < A03/A00 < 0.9. The lighting device of the invention may satisfy: condition 5: 5 < A03/A01 < 9. The lighting device of the invention may satisfy: condition 6: 2 < A03/A02 < 4.

According to an embodiment of the invention, an upper surface area of a region connecting outer lines of the first pattern of the first light-blocking portion is A1, and an upper or lower surface area of a region connecting outer lines of the second patterns of the second light-blocking portion is A2, and the following conditions may satisfy: condition 7: 1 < A2/A03 < 1.7 and condition 8: 2 < A1/A03 < 6. The lighting device of the invention may satisfy: condition 9: 2 < A1/A2 < 4.5.

According to an embodiment of the invention, the light-blocking member may include: a first edge having a long length in the second direction perpendicular to the first direction; a third edge located on an opposite side of the first edge and having the first patterns arranged in the second direction; and a second edge having the first patterns arranged in a shape that protrudes convexly in both directions from both ends of the first edge and both ends of the third edge. According to an embodiment of the invention, the lighting device includes a first protrusion and a second protrusion that protrude from the second edge and are spaced apart from each other, and each of the first protrusion and the second protrusion may have first patterns arranged in the second direction.

According to an embodiment of the invention, each of the light emitting devices includes first and second light emitting chips, and an optical axis of the first light emitting chip vertically overlaps with the first protrusion, an optical axis of the second light emitting chip vertically overlaps with the second protrusion, and each of the first and second protrusions may have six or less first patterns arranged in the second direction. According to an embodiment of the invention, a distance from a straight-line perpendicular to the emission surface of each light emitting device in the first direction to the end of the first light-blocking portion is E1, a distance to the end of the second light-blocking portion is E2, and a distance to the end of the third light-blocking portion is E3, and the following conditions may satisfy: condition 10: E3 < E2 < E1, condition 11: 1.6 mm < E3 < 2.6 mm, and condition 12: 1 < E2/E3 < 2.

A vehicle lamp according to an embodiment of the invention includes a lamp having the optical plate or lighting device disclosed above, and the lamp may include at least one of a side mirror lamp, a side lamp, a fog lamp, a tail lamp, a brake lamp, a daytime running lamp, a vehicle interior light, a door scarf, a rear combination lamp, and a backup lamp.

[Advantageous Effects]

According to an embodiment of the invention, lighting devices and lamps can have improved optical characteristics. Specifically, hot spots emitted from light emitting devices may be prevented by a light-blocking pattern disposed on a resin layer, thereby achieving a uniform light distribution. According to embodiments of the invention, light-blocking materials with adjustable density and thickness may be printed on each nozzle for inkjet printing, thereby controlling transmittance and enhancing brightness, thereby improving the lighting image.

According to embodiments of the invention, it is possible to prevent a problem in which some of the light-blocking pattern are lost or adjacent patterns are aggregated, thereby improving light uniformity and light blocking effect. According to embodiments of the invention, the reliability of a lighting device or vehicle lamp comprising a resin layer covering a light emitting device having a molded light-emitting chip and a light-blocking pattern on the resin layer may be improved.

[Description of Drawings]

FIG. 1a is an example of a plan view of a lighting device according to an embodiment of the invention.

FIG. 1b is an example of a plan view of another lighting device according to an embodiment of the invention.

FIG. 2 is an enlarged partial view showing the pattern of the light-blocking member of FIGS. 1a and 1b.

FIG. 3 is an enlarged partial view showing the light-blocking member and the light emitting device of FIGS. 1a and 1b.

FIG. 4 is a detailed drawing of the pattern of the light-blocking member of FIG. 3.

FIG. 5 is an example of a cross-sectional view taken along line A-A of the lighting device of FIG. 1.

FIG. 6 is an enlarged partial view of the lighting device of FIG. 5.

FIG. 7 is an example of a cross-sectional view taken along line B-B of the lighting device of FIG. 1.

FIG. 8 is an example of a cross-sectional view taken along line C-C of the lighting device of FIG. 1.

FIG. 9a(A) shows an example of forming patterns of the light-blocking member of the invention, and (B) shows another example.

FIG. 9b is a view showing an example of pattern formation of a light-blocking member according to a comparative example.

FIG. 10a is a view showing a partial plan view of a pattern of a light-blocking member according to an embodiment of the invention.

FIG. 10b(A)(B) is a view showing a mask and pattern collapse phenomenon for a silk screen process according to a comparative example.

FIG. 11 is a view showing an example of a printing system for a light-blocking member according to an embodiment of the invention.

FIG. 12 is a view showing patterns formed on a light-blocking member using multiple nozzles of the inkjet head of FIG. 11.

FIG. 13 is a flowchart illustrating a process for forming a light-blocking pattern according to an embodiment of the invention.

FIG. 14 is a view comparing the luminance distributions of light-blocking patterns of an embodiment of the invention and a comparative example.

FIG. 15 is a view illustrating a substrate equipped with a light emitting device according to an embodiment of the invention.

FIG. 16 is a view illustrating a lamp having a lighting device according to an embodiment of the invention.

FIG. 17 is a plan view of a vehicle to which the vehicle lamp of FIG. 16 is applied.

[Best Mode]

Hereinafter, preferred embodiment of the invention will be described in detail with reference to the accompanying drawings.

The technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology. Further, the terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

The lighting device according to the invention may be applied to a variety of lamp devices that require lighting, such as vehicle lamps, home lighting devices, or industrial lighting devices. For example, when applied to vehicle lamps, it is applicable to headlamps, sidelights, side mirrors, fog lights, tail lamps, brake lights, daytime running lights, vehicle interior lights, door scars, rear combination lamps, backup lamps, etc. The lighting device of the invention may be applied to indoor and outdoor advertising devices, display devices, and various electric vehicle fields, and in addition, it may be applied to all lighting-related fields or advertisement-related fields that are currently developed and commercialized or that may be implemented according to future technological developments.

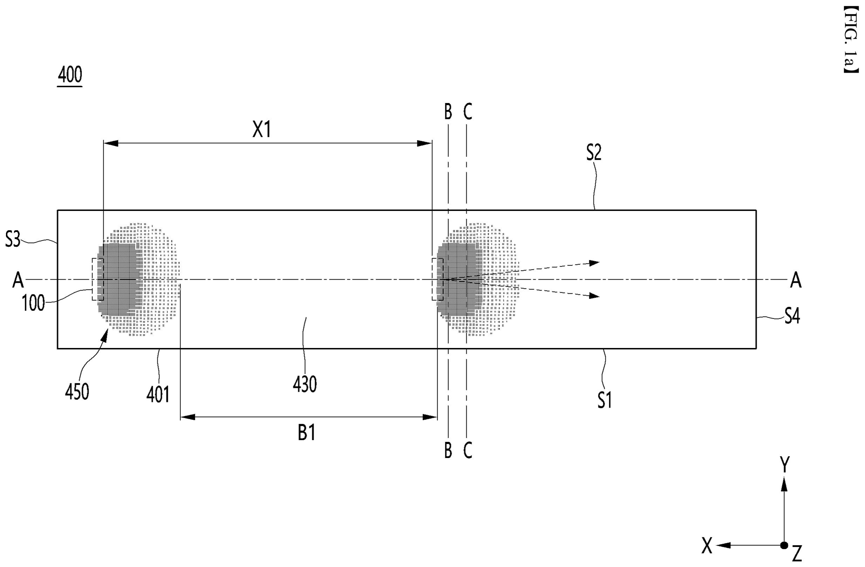

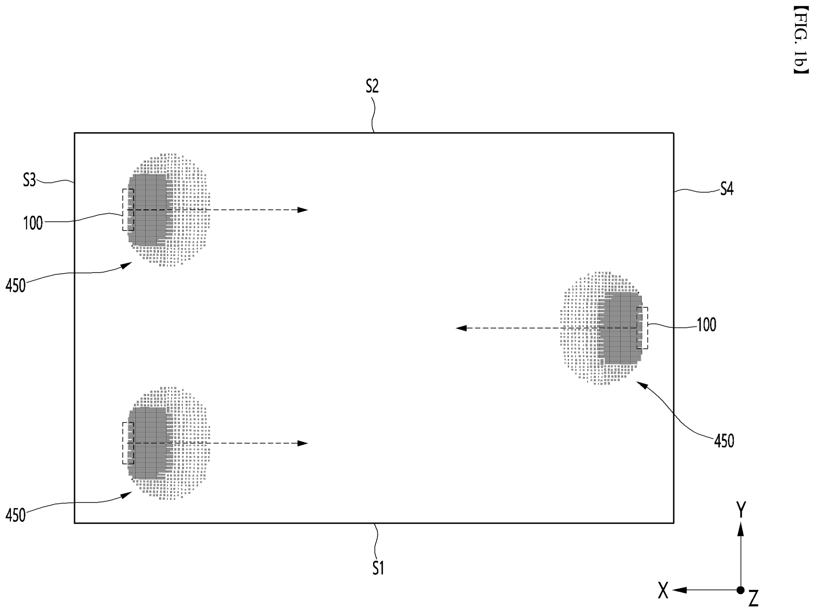

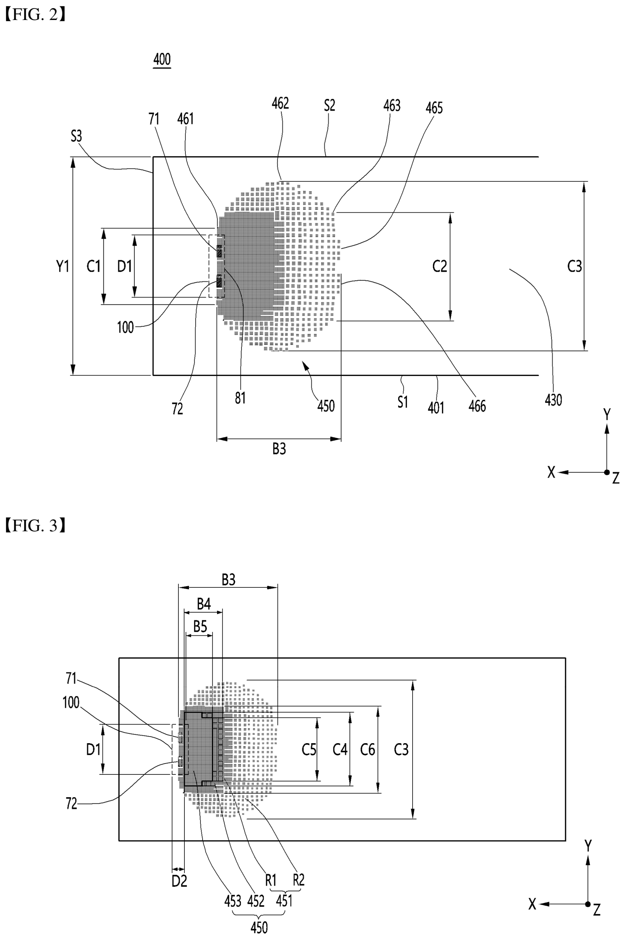

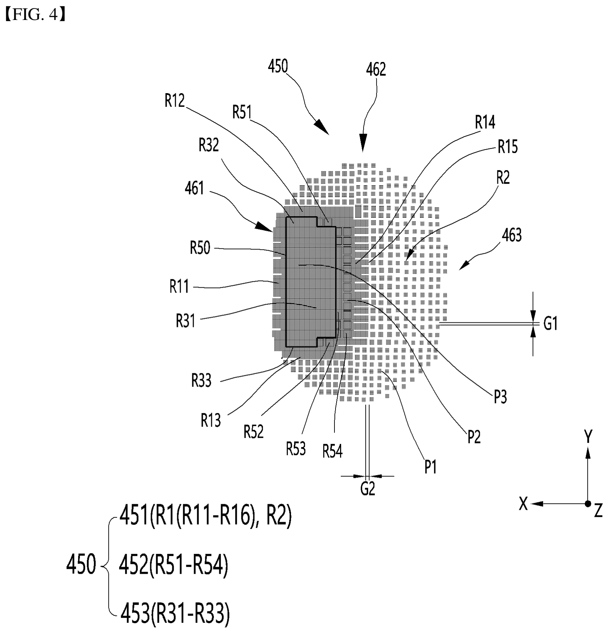

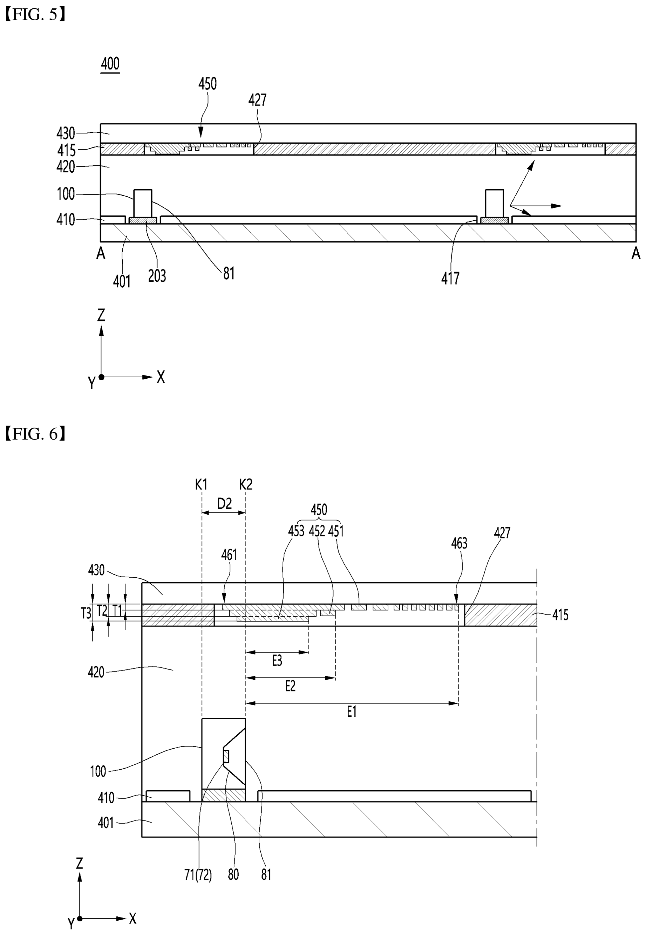

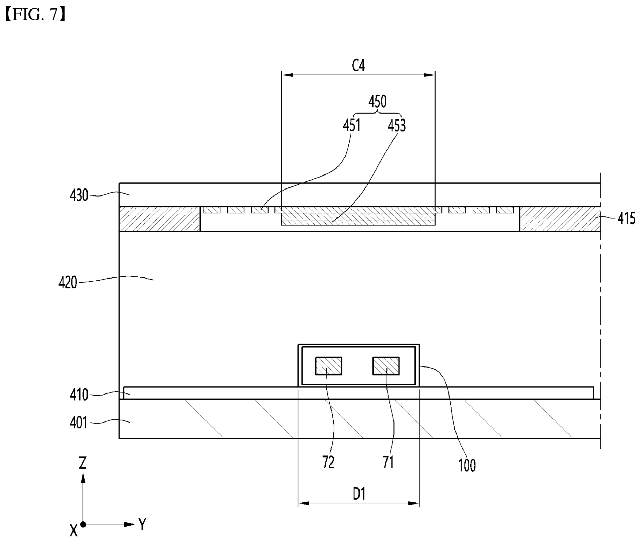

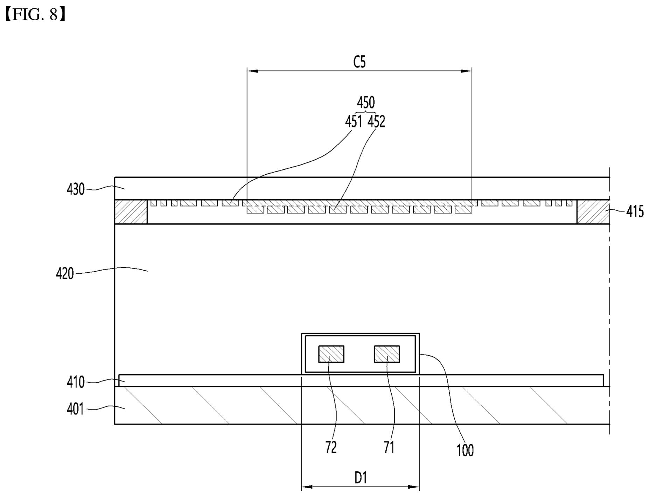

FIGS. 1a and 1b are examples of plan views of a lighting device according to an embodiment of the invention, FIG. 2 is a partially enlarged view showing the pattern of the light-blocking member of FIG. 1a and FIG. 1b, FIG. 3 is a partially enlarged view showing the light-blocking member and the light emitting device of FIG. 1a and FIG. 1b, FIG. 4 is a detailed drawing of the pattern of the light-blocking member of FIG. 3, FIG. 5 is an example of a cross-sectional view taken along line A-A of the lighting device of FIG. 1, FIG. 6 is an enlarged partial view of the lighting device of FIG. 5, FIG. 7 is an example of a cross-sectional view taken along line B-B of the lighting device of FIG. 1, and FIG. 8 is an example of a cross-sectional view taken along line C-C of the lighting device of FIG. 1.

Referring to FIGS. 1a to 8, a lighting device 400 according to an embodiment of the invention includes a substrate 401, a light emitting device 100, a resin layer 420, a light-blocking member 450, and an optical film 430. The optical plate includes the optical film 430 and the light-blocking member 450, and the light-blocking member 450 may be disposed on at least one of the upper and lower surfaces of the optical film 430, for example, may be disposed on the lower surface of the optical film 430. The lighting device 400 may include a reflective member 410 disposed between the substrate 401 and the resin layer 420. The lighting device 400 may emit light emitted from the light emitting device 100 as surface light. In contrast, the lighting device 400 can emit light emitted from the light emitting device 100 as line light. The lighting device 400 may be defined as a light-emitting cell or a light source module. The lighting device 400 may include one light-emitting cell or a plurality of light-emitting cells on the substrate 401. The lighting device 400 or the resin layer 420 may include first and second side surfaces S1 and S2 which are opposite sides in the second direction Y, and third and fourth side surfaces S3 and S4 which are opposite sides in the first direction X. The first and second side surfaces S1 and S2 can face each other, and may be opposite side surfaces of the substrate 401 and the resin layer 420 in the second direction Y. The third and fourth side surfaces S3 and S4 may face each other and may be both side surfaces of the first direction X of the substrate 401 and the resin layer 420. The first direction X may be an optical axis direction of the light emitting device 100 or the direction in which the plurality of light emitting devices 100 are arranged. The second direction Y is a direction orthogonal to the first direction X.

The resin layer 420 may cover the light emitting devices 100. The resin layer 420 may seal the light emitting devices 100. The resin layer 420 may guide light emitted from each of the plurality of light emitting devices 100 and emit the guided light in the form of surface light through the upper surface. The resin layer 420 may be laminated in a single layer or multiple layers using a transparent resin. At least one of the multiple resin layers 420 may include at least one or all of a diffuser, a phosphor, and ink particles. The resin layer 420 may be used as a thin light guide member, eliminating the need for a light guide plate made of transparent acrylic (e.g., PMMA).

<Substrate 401>

Referring to FIGS. 1a to 4, the substrate 401 may include a printed circuit board (PCB). The substrate 401 may include, for example, at least one of a resin-based PCB, a metal core PCB, a flexible PCB, a ceramic PCB, or an FR-4 substrate. If the substrate 401 is a metal core PCB with a metal layer disposed on the bottom, the heat dissipation efficiency of the light emitting device 100 may be improved. The substrate 401 may be electrically connected to the light emitting device 100. The substrate 401 includes a wiring layer (not shown) on the upper portion, and the wiring layer may be electrically connected to the light emitting device 100. When a plurality of light emitting devices 100 are arranged on the substrate 401, the plurality of light emitting devices 100 may be connected in series, in parallel, or in series-parallel through the wiring layer. The substrate 401 may function as a base member or a support member disposed below the light emitting device 100 and the resin layer 420.

The upper surface of the substrate 401 may be a flat plane or a curved surface. The thickness of the substrate 401 may be a height in the vertical direction or the Z direction. The substrate 401 may have a long bar shape in one direction, a polygonal shape, or a curved shape, depending on the shape of the lamp or lighting device 400. The substrate 401 may have a long length in a first direction X through which light is emitted, or a long length in a second direction Y orthogonal to the direction in which the light is emitted. In the drawing, the X direction may be the first direction, the Y direction may be the second direction, and the Z direction may be a direction orthogonal to the first and second directions. The length of the substrate 401 in the first direction X may be greater or less than the width in the second direction Y. The substrate 401 may include, for example, a reflective layer (not shown). The reflective layer may be an insulating layer or a layer of reflective material that protects a circuit pattern having pads disposed on the substrate 401.

<Light emitting device 100>

The plurality of light emitting devices 100 is disposed on the substrate 401 and emit light with the highest brightness in the first direction X. Each of the plurality of light emitting devices 100 may emit light in the first direction X. Each of the plurality of light emitting devices 100 is arranged in one or two rows, and may emit light from a region adjacent to the third side surface S3 toward the fourth side surface S4, or may emit light in directions facing each other from regions adjacent to the third side surface S3 and the fourth side surface S4. As another example, each of the plurality of light emitting devices 100 may emit light in the second direction Y. As another example, as shown in FIG. 1b, the plurality of light emitting devices 100 may be arranged along the third and fourth sides S3 and S4 of the substrate 401 and can emit light toward the third and fourth side surfaces S3 and S4. Here, the plurality of light emitting devices 100 may be arranged so as not to face each other but to be misaligned on the third and fourth side surfaces S3 and S4 of the substrate 401.

An emission surface 81 of the light emitting device 100 can emit light with the highest luminous intensity on one side, and the emission surface 81 can extend, for example, in a third direction Z or a vertical direction with respect to the horizontal upper surface of the substrate 401. A long axis direction of the emission surface 81 may be the second direction Y, and the short axis direction may be the third direction. The emission surface 81 may be a vertical plane, or may include a concave surface or a convex surface.

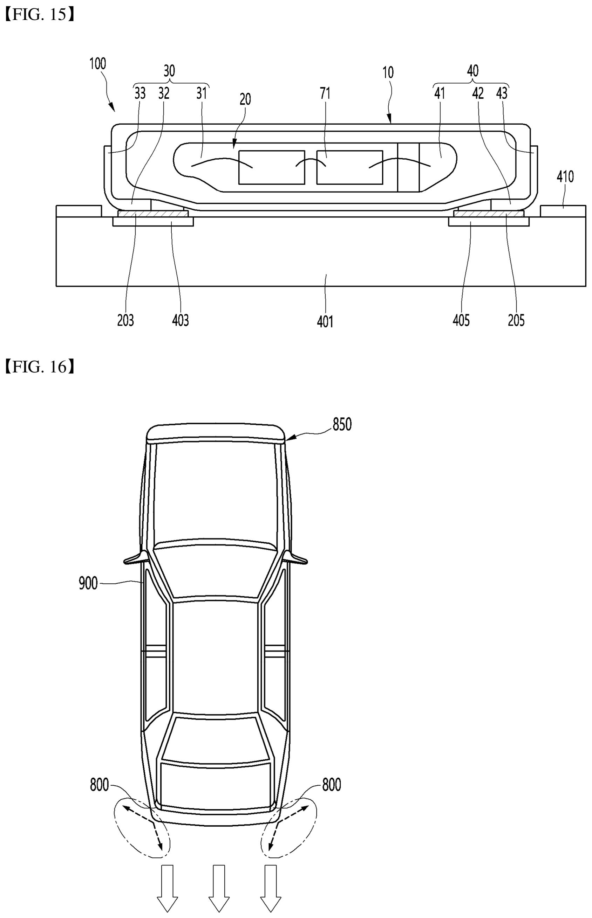

As shown in FIG. 15, the light emitting device 100 may be disposed on the substrate 401, for example, and may be electrically connected to pads 403 and 405 of the substrate 401 by conductive bonding members 203 and 205. The conductive bonding members 203 and 205 may be made of a solder material or a metal material. The light emitting devices 100 may be arranged in an M×N matrix on a substrate 401, and M and N may be integers greater than or equal to 2. Each of the light emitting devices 100 may be a device having a plurality of light emitting chips 71 and 72 or may include a package in which at least one light emitting chip is packaged. The light emitting chips 71 and 72 may be molded by a molding member 80. The plurality of light emitting chips 71 and 72 may be arranged in a direction perpendicular to the first direction X, and may include, for example, a first light emitting chip 71 and a second light emitting chip 72 spaced apart from each other. The emission surface 81 of the light emitting device 100 may be a surface of the molding member 80. The molding member 80 may be a transparent resin material such as silicone or epoxy. The light-emitting chips 71 and 72 can emit at least one of blue, red, green, ultraviolet (UV), and infrared, and the light emitting device 100 can emit at least one of white, blue, red, green, and infrared. Each of the first and second light-emitting chips 71 and 72 can emit the same color or different colors.

The light emitting device 100 may be a side-view type in which the bottom portion is electrically connected to the substrate 401, but is not limited thereto. As another example, the light emitting device 100 may be an LED chip or a top-view package. The emission surface 81 of the light emitting device 100 may be disposed on at least one side surface other than the upper surface of the light emitting device 100. The emission surface 81 may be a side surface of the light emitting device 100 adjacent to the substrate 401 or a side surface perpendicular to the upper surface of the substrate 401. The emission surface 81 is disposed on a side surface between the bottom surface and the upper surface of the light emitting device 100. The emission surface 81 of the light emitting device 100 may be a surface adjacent to the reflective member 410, or a surface perpendicular to the top surface of the substrate 401 or the top surface of the reflective member 410.

Some of the light emitted through the emission surface 81 of the light emitting device 100 may travel in a direction parallel to the top surface of the substrate 401, be reflected by the reflective member 410, or travel toward the top surface of the resin layer 420. The thickness of the light emitting device 100 may be, for example, 3 mm or less, for example, in the range of 0.4 mm to 3 mm. Referring to FIG. 3, a length D1 of the light emitting device 100 in the second direction Y may be at least 1.5 times larger than the width D2 in the first direction X and at least 1.5 times the thickness of the light emitting device 100. The light distribution emitted in the first direction X of the light emitting device 100 may have a light directivity angle in the $\pm$Y direction that is larger than the light directivity angle in the $\pm$Z direction. The light directivity angle of the light emitting device 100 in the second direction Y may be at least 110 degrees, for example, 120 to 160 degrees or 140 degrees. The light directivity angle of the light emitting device 100 in the third direction Z may have a range of at least 110 degrees, for example, 120 to 140 degrees.

<Reflective member 410>

The reflective member 410 may be a layer separately adhered to the upper portion of the substrate 401 or a layer protecting the upper portion of the substrate 401. The reflective member 410 may be, for example, disposed between the substrate 401 and the resin layer 420. The reflective member 410 may be provided in the form of a film made of a metallic or non-metallic material. The reflective member 410 may be adhered to the upper surface of the substrate 401. The reflective member 410 may have an area smaller than the upper surface area of the substrate 401. The reflective member 410 may be spaced apart from the edge of the substrate 401, and the resin layer 420 may be attached to the substrate 401 in the spaced-off region. At this time, the edge portion of the reflective member 410 may be prevented from peeling off. The reflective member 410 may include an opening portion 417 in which the lower portion of the light emitting device 100 is disposed. The upper surface of the substrate 401 may be exposed in the opening portion 417 of the reflective member 410, and a portion where the lower portion of the light emitting device 100 is bonded may be disposed. The size of the opening portion 417 may be the same as or larger than the size of the light emitting device 100, but is not limited thereto. The reflective member 410 may be in contact with the upper surface of the substrate 401, or may be adhered between the resin layer 420 and the substrate 401, but is not limited thereto. Here, the reflective member 410 may be removed when a highly reflective material is coated on the upper surface of the substrate 401.

The reflective member 410 may be formed to a thickness thinner than the thickness of the light emitting device 100. The thickness of the reflective member 410 may range from 0.2 mm $\pm$ 0.02 mm. The lower portion of the light emitting device 100 may penetrate through the opening portion 417 of the reflective member 410, and the upper portion of the light emitting device 100 may protrude. The emission surface 81 of the light emitting device 100 may be provided in a direction perpendicular to the upper surface of the reflective member 410.

The reflective member 410 may include a metallic material or a non-metallic material. The metallic material may include a metal such as aluminum, silver, or gold. The non-metallic material may include a plastic material or a resin material. The resin material may include a reflective material, for example, a metal oxide such as $TiO_2$, $Al_2O_3$, or $SiO_2$, added to silicone or epoxy. The reflective member 410 may be implemented as a single layer or multiple layers, and this layer structure can improve light reflection efficiency. The reflective member 410 according to an embodiment of the invention can increase the amount of light by reflecting incident light, thereby ensuring a uniform light distribution.

<Resin Layer 420>

The resin layer 420 may be disposed on the substrate 401. The resin layer 420 may be disposed over the entire upper surface of the substrate 401. As another example, the resin layer 420 may be disposed over a portion of the upper surface of the substrate 401. The resin layer 420 may have a region facing the substrate 401 or adhered to the upper surface of the substrate 401. The lower surface area of the resin layer 420 may be equal to or smaller than the upper surface area of the substrate 401. The resin layer 420 may be formed of a transparent material and may guide or diffuse light. The resin layer 420 may include a resin material that is curable by UV (Ultraviolet), and may be used instead of a light guide plate, and may have the effect of conveniently controlling the refractive index and thickness. Since the resin layer 420 is provided as a layer that guides light with resin, it may be provided with a thinner thickness than in the case of glass and may be provided as a flexible plate. The resin layer 420 may emit point light emitted from the light emitting device 100 in the form of line light or surface light.

The resin layer 420 may include beads (not shown), and the beads may diffuse and reflect incident light, thereby increasing the amount of light. The beads may be arranged in a range of 0.01 to 0.3% relative to the weight of the resin layer 420. The beads may be composed of any one selected from silicon, silica, glass bubbles, PMMA (polymethyl methacrylate), urethane, zinc, zinc, aluminum oxide ($Al_2O_3$), and acrylic. The particle size of the beads may range from about 1

μm to about 20 μm, but is not limited thereto.

The thickness of the resin layer 420 may be 1.8 mm or more, for example, 1.8 mm to 2.5 mm. If the thickness of the resin layer 420 is thicker than the above range, the brightness may be reduced, and it may be difficult to provide a flexible module due to the increased module thickness. If the thickness of the resin layer 420 is smaller than the above range, it is difficult to provide a surface light source with uniform brightness.

The resin layer 420 seals the plurality of light emitting devices 100, thereby protecting each light emitting device 100 and reducing loss of light emitted from each light emitting device 100. The upper portion of each light emitting device 100 may be embedded in a lower portion of the resin layer 420. The resin layer 420 may be in contact with the surface of the light emitting device 100 and may be in contact with the emission surface 81 of the light emitting device 100. The resin layer 420 may be in contact with the upper surface and side surfaces of the light emitting device 100, or with the emission surface 81 and non-emission surfaces. A portion of the resin layer 420 may be disposed in the opening portion 417 of the reflective member 410.

<Light-transmitting layer 415>

The light-transmitting layer 415 may be an adhesive material such as silicone or epoxy, or may include a diffusion material. The diffusion material may include at least one of polyester (PET), poly methyl methacrylate (PMMA), or poly carbonate (PC). The light-transmitting layer 415 may adhere to the upper surface of the resin layer 420. The light-transmitting layer 415 may adhere the optical film 430 to the upper surface of the resin layer 420. The inner region of the light-transmitting layer 415 may include the light-blocking member 450 and an air gap portion 427. The thickness of the light-transmitting layer 415 may be equal to or thicker than the maximum thickness of the light-blocking member 450. The air gap portion 427 may be positioned between the light-transmitting layer 415 and the light-blocking member 450. The air gap portion 427 may extend further between the light-blocking member 450 and the resin layer 420. Accordingly, the lower surface area of the air gap portion 427 may be larger than the upper surface area of the light-blocking member 450. The air gap portion 427 may perform a light-blocking function at the lower portion and periphery of the light-blocking member 450.

<Light-blocking member 450>

The light-blocking members 450 may be arranged in a plurality of directions X. Each of the plurality of light-blocking members 450 may face a portion of the upper surface of the resin layer 420. A portion of each of the light-blocking members 450 may overlap each of the plurality of light emitting devices 100 in the vertical direction or the third direction Z. Each of the plurality of light-blocking members 450 may overlap each of the emission surfaces 81 of the plurality of light emitting devices 100 in the vertical direction. The light-blocking member 450 may be disposed between the resin layer 420 and the optical film 430. The light-blocking member 450 may have a light-blocking pattern and may be formed on a lower surface of the optical film 430. That is, the light-blocking member 450 may be integrally formed on the lower surface of the optical film 430. The optical film 430 may include the light-blocking member 450. As another example, the light-blocking member 450 may have a light-blocking pattern and may be formed on an upper surface of the optical film 430. The light-blocking member 450 may have a light-blocking pattern and be formed on the upper surface of the resin layer 420. As another example, when the optical films 430 are arranged in multiple layers, the light-blocking member 450 may be arranged between the multiple optical films and may be formed on the upper surface of the lower optical film or the lower surface of the upper optical film.

The light-blocking member 450 may be disposed within the light-transmitting layer 415. The light-blocking member 450 may penetrate the light-transmitting layer 415 and may be in contact with at least one of the resin layer 420 and the optical film 430. The light-blocking member 450 may not be in contact with the light-transmitting layer 415. A region spaced apart from the inside of the light-transmitting layer 415 and/or the upper surface of the resin layer 420 may be defined as an air gap portion 427. The air gap portion 427 may provide a refractive index different from the refractive indexes of the light-blocking member 450 and the light-transmitting layer 415, thereby improving light diffusion efficiency. The lower surface of the light-blocking member 450 may be spaced apart from or not in contact with the upper surface of a layer positioned thereunder, for example, the upper surface of the resin layer 420. The air gap portion 427 may be a vacuum region. A distance B1 between adjacent light-blocking members 450 may be smaller than the distance X1 between adjacent light emitting devices 100. Each light-blocking member 450 may be spaced apart from the outer surface of the resin layer 420. A plurality of light-blocking members 450 have the same shape and may be disposed on each light emitting device 100. Each light-blocking member 450 may be disposed in a region perpendicular to each light emitting device 100 and a surrounding region thereof.

The light-blocking member 450 may be a region printed with a white material. The light-blocking member 450 may be formed of a light-blocking material having a diffusion agent, for example, at least one of $TiO_2$, $Al_2O_3$, $CaCO_3$, $BaSO_4$, and Silicon, within a resin material. The light-blocking member 450 may reflect light emitted through the emission surface 81 of the light emitting device 100, thereby reducing the occurrence of hot spots on the light emitting device 100. The light-blocking member 450 may print a light-blocking pattern using the light-blocking material. The light-blocking member 450 may be formed by being printed on the lower surface of the optical film 430. The light-blocking member 450 is a material that does not 100% block incident light, may have a transmittance lower than a reflectance, and may perform the functions of light-blocking and light-diffusing. The light-blocking member 450 may have a transmittance of less than 12%, for example, in the range of 6% to 11%. If the transmittance of the light-blocking member 450 is lower than the above range, dark regions may occur, and if the transmittance is higher than the above range, light uniformity may deteriorate.

The light-blocking member 450 may be formed as a single layer or multiple layers, and the patterns of the light-blocking member 450 may have different shapes depending on the region. The thickness of the light-blocking member 450 may vary depending on the region. The thickness of the light-blocking member 450 may be thickest in the region overlapping the emission surface 81 of each light emitting device 100 and thinnest in the edge region. In the thickness of the light-blocking member 450, a region closer to the emission surface 81 of the light emitting device 100 may be thicker, and a region closer to the edge than the emission surface 81 may be thinner. Among the regions of the light-blocking member 450, a region closer to the emission surface 81 is an inner region, and a region closer to the edge is an outer region. A pattern of the smallest pattern of the patterns of the light-blocking member 450 may have a polygonal shape such as a square, a circular shape, or an oval shape. A pattern of the largest size among the patterns of the light-blocking member 450 may have a shape having a lower surface area larger than the upper surface area of the light emitting device 100.

The light-blocking member 450 may be disposed at a position higher than the upper surface of the resin layer 420. The light-blocking member 450 may include at least two layers, for example, at least three layers, depending on the thickness or height relative to the optical film 430.

As shown in FIGS. 5 to 8, the maximum thickness of the light-blocking member 450 may be 35 $\mu$m or more, for example, in a range of 35 $\mu$m to 200 $\mu$m. If the maximum thickness of the light-blocking member 450 is less than 35 $\mu$m, it may be difficult to effectively block light incident from a lower portion of the light-blocking member 450, or the transmittance may increase, resulting in uneven light distribution on the light-blocking member 450. In addition, when the maximum thickness of the light-blocking member 450 is greater than 200,um, the formation of hot spots by the light emitted from each light emitting device 100 may be effectively controlled, but the light emitted from the light emitting device 100 may be lost in the process of passing through the light-blocking member 450, which may lower the overall brightness. Therefore, it is preferable that the thickness of the light-blocking member 450 satisfies the above-described range.

Referring to FIG. 6, a first thickness T1, which is the minimum thickness of the light-blocking member 450, is 35$\mu$m or more, and may satisfy, for example, $35\mu m \leq T1 \leq 50\mu m$, and preferably, $35\mu m \leq T1 \leq 45\mu m$. If the first thickness T1 of the light-shielding member 450 is smaller than the above-described range, it may go beyond the range of transmittance disclosed above and light uniformity may deteriorate, and if it is larger than the above-described range, it may go below the range of transmittance disclosed above and dark regions may occur. A third thickness T3, which is the maximum thickness of the light-blocking member 450, is 100 $\mu$m or more, and may satisfy, for example, $100\ \mu m \leq T3 \leq 200\ \mu m$, and preferably, $110\ \mu m \leq T3 \leq 150\ \mu m$ or $110\ \mu m \leq T3 \leq 130\ \mu m$. If the third thickness T3 of the light-blocking member 450 is smaller than the above range, it may fall outside the range of the transmittance disclosed above and the light uniformity may deteriorate. If it is larger than the above range, it may fall below the range of the transmittance disclosed above and a dark spot may occur. The light-blocking member 450 may include a region having a second thickness T2. The second thickness T2 is greater than the first thickness T1 and less than the third thickness T3. The second thickness T2 is a thickness between the first thickness T1 and the third thickness T3, and is 70 $\mu$m or more. For example, it may satisfy: $70\ \mu m \leq T2 \leq 140\ \mu m$, and preferably, it may satisfy: $70\ \mu m \leq T2 \leq 110\ \mu m$ or $75\ \mu m \leq T2 \leq 100\ \mu m$. When the second thickness T2 of the light-blocking member 450 is smaller than the above range, the transmittance range disclosed above may be exceeded, and light uniformity may be deteriorated. When the second thickness T2 of the light-blocking member 450 is larger than the above range, the transmittance range disclosed above may be lowered, and dark regions may occur. The third thickness T3 may be greater than the sum of the first thickness T1 and the second thickness T2, and may range from 130% to 170% of the sum of the first thickness T1 and the second thickness T2.

The light-blocking member 450 may include a first light-blocking portion 451, a second light-blocking portion 452, and a third light-blocking portion 453. At least one or all of the first to third light-blocking portions 451, 452, and 453 may include the light-blocking material. The first light-blocking portion 451 may have a first thickness T1 or a first height, the second light-blocking portion 452 may have a second thickness T2 or a second height, and the third light-blocking portion 453 may have a third thickness T3 or a third height. The first to third thicknesses T1, T2, and T3 may satisfy the condition: T1 < T2 < T3 based on the optical film 430.

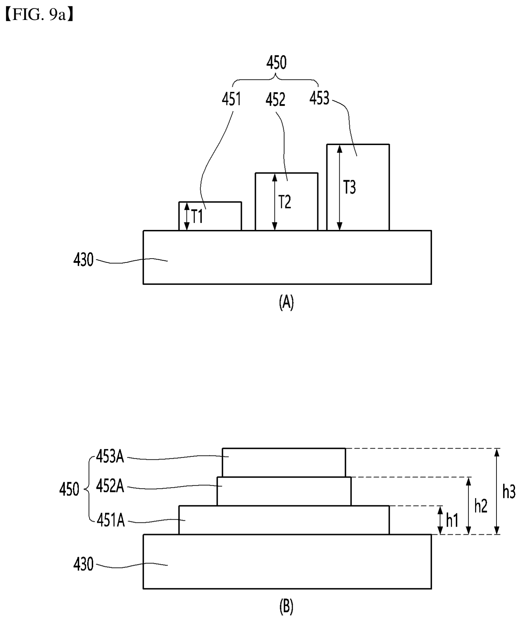

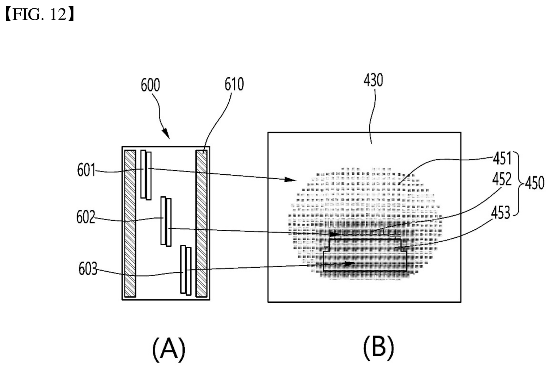

As shown in (A) of FIG. 9a, the light-blocking member 450 may be formed with different thicknesses for each layer on the optical film 430 by an inkjet printing process. For example, the first light-blocking portion 451 of the light-blocking member 450 has a first thickness T1, the second light-blocking portion 452 is formed with a second thickness T2 that is thicker than the first thickness T1, and the third light-blocking portion 453 is formed with a third thickness T3 that is thicker than the second thickness T2. Here, the first to third light-blocking portions 451, 452, and 453 may be formed regardless of the order, and for example, may be formed in the order of the first to third light-blocking portions 451, 452, and 453. As another example, the light-blocking member 450 may be formed in the order of the third light-blocking portion 453, the second light-blocking portion 452, and the first light-blocking portion 451, or may be formed in the order of the second light-blocking portion 452, the third light-blocking portion 453, and the first light-blocking portion 451, or may be formed in the order of the third light-blocking portion 453, the first light-blocking portion 451, and the second light-blocking portion 452. This process can form different thicknesses for each light-blocking portion 451, 452, and 453, thereby reducing the curing time. In addition, by forming each layer with a different thickness, it is possible to prevent problems such as the collapse of the layer boundary or the uneven spacing between patterns in each area. For example, as shown in FIG. 12(A)(B), the method of forming the light-blocking member 450 may include forming a first light-blocking portion 451 having a first thickness T1 on an optical film 430 by printing using an ink jet method, forming a second light-blocking portion 452 having a second thickness T2 by using an ink jet printing method, and forming a third light-blocking portion 453 having a third thickness T3 by using an ink jet printing method. The second light-blocking portion 452 may be formed within the region of the first light-blocking portion 451. The third light-blocking portion 453 may be arranged within the regions of the first and second light-blocking portions 451 and 452. This method uses nozzles 601, 602, and 603 corresponding to each of the first to third light-blocking portions 451, 452, and 453 to form an amount corresponding to the thickness of each light-blocking portion 451, 452, and 453 through a dispensing process, and may be cured using an ultraviolet curing device 610. Each of the first to third light-blocking portions 451, 452, and 453 may not overlap each other in the vertical direction. The patterns of each of the first to third light-blocking portions 451, 452, and 453 may be formed without a rounded upper corner or upper circumference. By this light-blocking member, the uniformity of the patterns of each light-blocking portion may be improved, and the brightness and luminous flux may be improved.

As shown in (B) of Fig. 9a, the light-blocking member 450 may be formed with the same or similar thickness for each layer by an ink jet printing process. For example, the first, second, and third light-blocking portions 451A, 452A, and 453A of the light-blocking member 450 may have the same thickness or a thickness difference of 10% or less. At this time, the first light-blocking portion 451A is formed on the surface of the optical film 430, the second light-blocking portion 452A is formed on the first light-blocking portion 451A, and the third light-blocking portion 453A is formed on the second light-blocking portion 452A. In other words, a first light-blocking portion 451A having a first thickness h1 or a first height is printed using an ink jet method and cured, and then a second light-blocking portion 452A is formed on a portion of the first light-blocking portion 451A and cured. At this time, the thickness of the second light-blocking portion 452A may be the same as the thickness of the first light-blocking portion 451A or may be formed with a difference of 10% or less. This method uses a nozzle corresponding to the first light-blocking portion 451A to form the first light-blocking portion, then uses the nozzle again to form the second light-blocking portion 452A on a portion of the first light-blocking portion 451A, cures it with an ultraviolet curing device, and then uses the nozzle again to form a third light-blocking portion 453A on a portion of the second light-blocking portion 452A, and cures it with an ultraviolet curing device. That is, inkjet printing is performed by repeatedly moving the nozzle to form the thickness of each light-blocking portion. In this structure, the first light-blocking portion 451A, the second light-blocking portion 452A, and the third light-blocking portion 453A are formed as separate layers, each with a different thickness h1, h2, and h3 or top surface height, and the condition may satisfy: $h1 < h2 < h3$. Here, h1 is within the same range as T1, h2 is within the same range as T2, and h3 is within the same range as T3. The method for forming the light-blocking portion may be selected from the two methods described above by adjusting the nozzle.

The light-blocking portion 450 according to an embodiment of the invention may include light-blocking portions having different thicknesses for each region. The light-blocking portions 451, 452, and 453 of the light-blocking portion 450 may be formed of the same material, each having a different thickness. In the light-blocking member 450, the third thickness T3 of the third pattern P3 may be 2.5 times or more, for example, 2.5 to 5 times, the first thickness T1 of the first pattern P1, and preferably, 2.5 to 3.5 times or 2.8 to 3.2 times. If the thickness difference between the first and third patterns P1 and P3 of the light-blocking member 450 is smaller than the above range, the light-blocking effect of light with high brightness is minimal, and if it is larger than the above range, light loss may increase. By arranging a thick pattern in a region where the brightness of the incident light is high due to the thickness difference between the first and third patterns P1 and P3 of the light-blocking member 450 and arranging a thin pattern in a region where the brightness of the incident light is low, the light-blocking effect and light uniformity may be improved.

The maximum area of the region formed by the virtual line connecting the outer patterns of the light-blocking member 450 may be at least 5 times the upper surface area of the light emitting device 100, for example, 5 to 12 times, or 6 to 10 times. The maximum area of the region formed by the virtual line connecting the outer patterns of the light-blocking member 450 may be the upper surface area of the light-blocking member 450. The upper surface area of the light-blocking member 450 may be the area of the region connecting the outer surfaces of the first patterns of the first layer. The lower surface area of the light-blocking member 450 may be the area of the region connecting the outer surfaces of the third patterns P3 of the third light-blocking portion 453, and may be the minimum area. The lower surface area of each of the light-blocking members 450 may be at least 1 time the upper surface area of each of the above light emitting devices 100, for example, in the range of 1 to 2.5 times or 1.5 to 2.5 times. Accordingly, the problem of the light emitting device 100 being visible from the outside may be reduced, and hot spots on the region of the light emitting device 100 may be reduced, thereby providing a uniform light distribution over the entire region.

Each of the plurality of light-blocking members 450 may include a first edge 461, a second edge 462, and a third edge 463 along the outer lines of the patterns. The first edge 461 is a region where at least a portion of the first edge 461 is adjacent to or vertically overlaps each of the light-emitting devices 100, the third edge 463 is a region on the opposite side of the first edge 461, and the second edge 462 is a line on both sides of the second direction Y of each of the light-blocking members 450, and may have a biconvex shape. The first edge 461 has a virtual straight-line shape, and the third edge 463 has a virtual straight-line shape and may have a straight-line length longer than the straight-line length of the first edge 461.

The convex shape of the second edge 462 of the light-blocking member 450 may be convex toward the outside or the second side S3 in the region between one end of the first edge 461 and one end of the third edge 463, and may be convex toward the outside or the first side surface S1 in the region between the other end of the first edge 461 and the other end of the third edge 463. The length C1 of the first edge 461 of the light-blocking member 450 in the second direction Y may be smaller than the length C2 of the third edge 463 in the second direction Y, and the maximum length C3 between the second edges 462 on both sides may be provided to be longer than the length C2 of the third edge 463. Here, the length of the second direction Y of the second edges 462 on both sides may gradually increase from both ends of the first edge 461 toward the center of the second edge 462, and may gradually decrease from the center of the second edge 462 toward both ends of the third edge 463.

The length C1 of the first edge 461 of the light-blocking member 450 is arranged to be at least 0.8 mm longer than the length D1 of the light emitting device 100, thereby covering both sides of the emission surface of the light emitting device 100 and preventing hot spots caused by light emitted from the light emitting device 100. The ratio of the length D1 of the light emitting device 100 to the length of the light-blocking member 450 is as follows.

$$\text{Condition 1: } 1 < C1/D1 < 1.5$$

$$\text{Condition 2: } 1.3 < C2/D1 < 1.8$$

$$\text{Condition 3: } 2 < C3/D1 < 3$$

In Conditions 1 and 2, the condition satisfies: C1/D1 < D2/D1. If at least one of Conditions 1-3 is satisfied, the light uniformity around the light-blocking member 450 and its surroundings may be improved. If the light-blocking member 450 is smaller than the above range, hot spots may occur or light uniformity may deteriorate. If the light-blocking member 450 is larger than the above range, light loss or dark areas may occur.

The maximum length C3 of the light-blocking member 450 in the second direction Y may vary depending on the length D1 of the light emitting device 100 in the second direction Y. The maximum length C3 may be 9 mm or more, for example, 9 to 20 mm or 10 to 18 mm. The maximum length B3 of the light-blocking member 450 in the first direction X may be equal to or less than the maximum length C3 in the second direction Y. The maximum length B3 of the light-blocking member 450 in the first direction X may be 7 mm or more, for example, in the range of 7 mm to 13 mm. The length of the light-blocking member 450 may cover the upper, front, and both sides of the emission surface 81 of the light emitting device 100, prevent hot spots caused by light emitted from the light emitting device 100, and improve light uniformity.

The length of the light emitting device 100 in the first direction X is D2, and the ratio of this length to the maximum length B3 of the light-blocking member 450 in the first direction X may satisfy the following condition.

$$\text{Condition: } 3 < B3/D2 < 7 \text{ or } 4 \leq B3/D2 \leq 6$$

If the above conditions are met, the light uniformity around the light-blocking member 450 may be improved. If the light uniformity is less than the above range, hot spots may occur or light uniformity may deteriorate. If the light uniformity is greater than the above range, light loss or dark regions may occur.

The third edge 463 of the light-blocking member 450 may include protrusions 465 and 466 that protrude further than a virtual straight-line. The protrusions 465 and 466 may include a first protrusion 465 and a second protrusion 466 spaced apart in the second direction Y. The first protrusion 465 includes six or less, for example, two to six, patterns arranged parallel to the long axis direction of the emission surface 81 of the light emitting device 100, and may be a region that vertically overlaps with the optical axis of the first light-emitting chip 71. Here, the optical axis of the first light-emitting chip 71 is an axial direction on the emission side that is perpendicular to the center of the first light-emitting chip 71. The first protrusion 465 can block light having a high luminous intensity emitted from the center of the first light-emitting chip 71. The long axis direction of the emission surface 81 is the second direction Y.

The second protrusion 466 includes two or more, for example, two to six, patterns arranged parallel to the emission surface 81 of the light emitting device 100, and may be a region that vertically overlaps with the optical axis of the second light-emitting chip 72. Here, the optical axis of the second light-emitting chip 72 is an axis direction on the emission side that is perpendicular to the center of the second light-emitting chip 72. The second protrusion 466 can block light having a high luminous intensity emitted from the center of the second light-emitting chip 72. Accordingly, the first and second protrusions 465 and 466 are positioned on regions perpendicular to the optical axes of the first and second light-emitting chips 71 and 72, thereby blocking high-intensity light according to the beam angles of the first and second light-emitting chips 71 and 72, thereby preventing hot spots on the third edge 463 of the light-blocking portion 450.

<Optical Film 430>

The optical film 430 may be positioned on the resin layer 420. The lower surface of the optical film 430 may have the light-transmitting layer 415 and the light-blocking member 450 disposed thereon. The light-blocking member 450 may be printed on the lower surface of the optical film 430, and may be fixed to the resin layer 420 via the light-transmitting layer 415. The optical film 430 may include at least one of a polyester (PET) film, PMMA (Poly Methyl Methacrylate) material, or PC (Poly Carbonate). The optical film 430 may be provided as a film made of a resin material such as silicone or epoxy. The optical film 430 may include a single layer or multiple layers. As another example, when a lower optical film (not shown) is disposed between the light-transmitting layer 415 and the resin layer 420, the lower optical film may adhere to the resin layer 420. For example, the upper surface of the resin layer 420 may adhere to the lower optical film by a first adhesive force having fine cilia. At this time, the optical film 430 or/and the lower optical film may be attached to the resin layer 420 by applying a predetermined pressure or pressure/heat.

The thickness of the optical film 430 is $25\,\mu m$ or more, and may be, for example, in the range of $25\,\mu m$ to $250\,\mu m$ or in the range of $100\,\mu m$ to $250\,\mu m$. The optical film 430 can provide incident light with the above thickness range as a uniform surface light source. The optical film 430 or/and the lower optical film may include at least one or two or more of a dispersing agent such as beads, a phosphor, and ink particles. The phosphor may include, for example, at least one of a red phosphor, an amber phosphor, a yellow phosphor, a green phosphor, or a white phosphor. The ink particles may include at least one of a metallic ink, a UV ink, or a curable ink. The size of the ink particles may be smaller than the size of the phosphor. The surface color of the ink particles may be any one of green, red, yellow, and blue. The ink type may be selectively applied from among PVC (Polyvinyl chloride) ink, PC (Polycarbonate) ink, ABS (acrylonitrile butadiene styrene copolymer) ink, UV resin ink, epoxy ink, silicone ink, PP (polypropylene) ink, water-based ink, plastic ink, PMMA (poly methyl methacrylate) ink, and PS (polystyrene) ink. The ink particles may include at least one of metal ink, UV ink, or curing ink.

In an embodiment of the invention, light diffused by the resin layer 420 may be transmitted through the light-transmitting layer 415 and emitted as uniform surface light through the optical film 430. At this time, the light-blocking member 450 may prevent hot spots caused by the incident light. In another example of the invention, a layer of a reflective material or an upper substrate may be disposed on the resin layer 420. The reflective material layer or upper substrate may face the upper surface of the resin layer 420, and the light emitting devices 100 may be arranged in at least one row or column. Each emission surface 81 of the light emitting devices 100 may be arranged at the same interval as one side of the resin layer 420 and may emit light through one side of the resin layer 420.

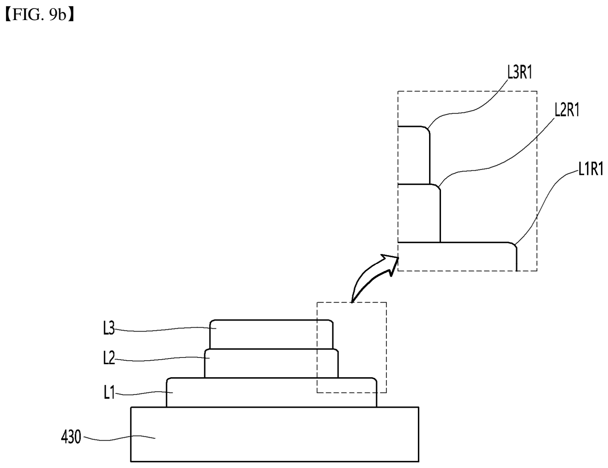

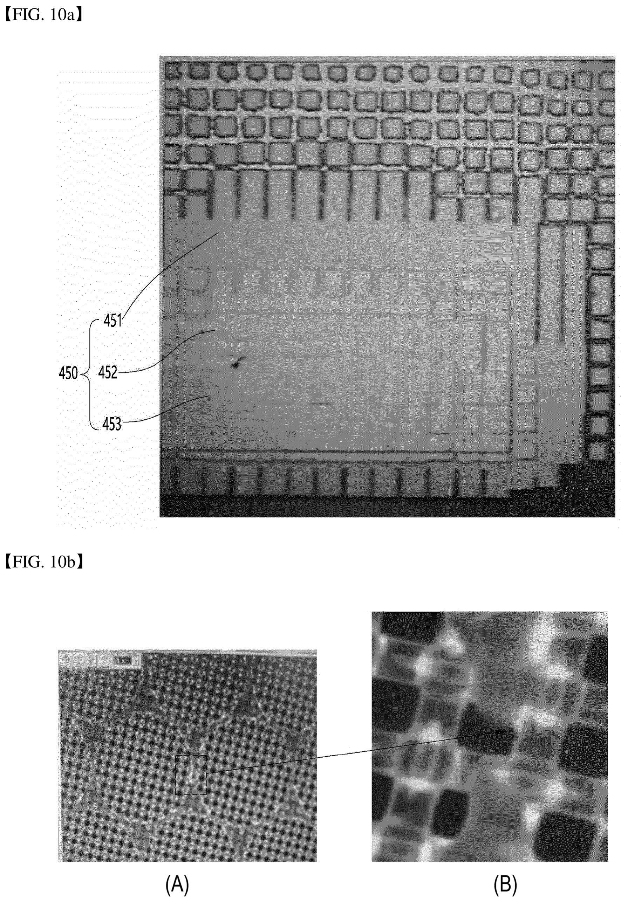

The light-blocking member 450 according to an embodiment of the invention may be formed on the surface of an optical film 430 having a diffusion agent, for example, using inkjet printing. Unlike a silk screen method using a separate mask mesh, the inkjet printing method can form different thicknesses in each region through nozzles. When forming the light-blocking patterns of the light-blocking member by the silk screen method as in the past, the shape of the required light-blocking pattern, for example, the shape of some patterns may not be maintained as a rectangular shape and may be formed irregularly, and the patterns with such shape differences may cause differences in the uniformity of the image for each product, and the optical reliability of the lighting device may be reduced. In addition, in the past, when the size of some patterns was small, the emulsion film applied on the mesh of the mask may be blocked, and this may cause the printed pattern to be lost. In addition, in the past, when the size of some patterns was large, the emulsion collapsed on the mesh of the mask, which caused clumping between the patterns (see (B) of Fig. 10b), and due to the clumping pattern, it may be difficult to control the density of the light-blocking patterns, and there is a limit to improving the lamp image. Furthermore, as shown in FIG. 9b, when the light-blocking patterns in the comparative example are laminated in multiple layers L1, L2, and L3, they are repeatedly formed using different masks. At this time, since the upper side edges of the patterns in each layer L1, L2, and L3 are processed as curved surfaces L1R1, L2R1, and L3R1, the area of each pattern may decrease when forming the second and third layers L2 and L3. This may result in an increase in the area of the lower patterns in each layer L1, L2, and L3 or a reduction in the shading effect at the outer curved surfaces L1R1, L2R1, and L3R1 of the light-blocking patterns. Furthermore, since the comparative example uses a mask, there are problems such as the thickness within a single layer being the same, making it difficult to provide various pattern thicknesses for each layer, and also making it difficult to control the density by region.

Embodiments of the invention form light-blocking patterns using inkjet printing. This eliminates the need for conventional masks and emulsions, enabling the production of more precise, smaller-sized and larger patterns without loss or clumping. Furthermore, since desired light-blocking patterns are formed according to design, the uniformity of product images may be prevented, pattern density may be easily adjusted, and the reliability of lamp images may be prevented. Embodiments of the invention enable density control for each light-blocking area using a nozzle when forming light-blocking patterns using inkjet printing, providing a pattern optimized for the shape of the lighting lamp. Furthermore, to control hot spots on the surface of a light emitting device and maximize light diffusion (light guiding) to the next light emitting device, the pattern size and density of the light-blocking areas may be adjusted using inkjet printing.

As shown in FIGS. 3 to 5, the first light-blocking portion 451 of the light-blocking member 450 may include a first region R1 having dense first patterns P1 on the emission surface 81 of the light emitting device 100, and a second region R2 having sparse first patterns P1 than the patterns of the first region R1. Here, the gaps G1 and G2 between the first patterns P1 in the first region R1 may be 1 mm or less, and the gaps G1 and G2 between the first patterns P1 in the second region R2 may be more than 1 mm. The first light-blocking portion 451 may have the largest patterns among the first patterns P1 arranged around the periphery of the second and third light-blocking portions 452 and 453. That is, the first pattern P1 of the first light-blocking portion 451 may have patterns having the largest size or area around the second and third light-blocking portions 452 and 453. In the light-blocking member 450, the first light-blocking portion 451 is provided as a dot-shaped pattern in FIGS. 3 and 4. The length C6 of the first region R1 of the first light-blocking portion 451 in the second direction Y may be 1.2 times or more, for example, 1.2 to 2 times, or 1.4 to 1.8 times, the length D1 of the light emitting device 100 in the second direction Y. That is, since the first region R1 having a dense pattern covers the upper portion of the emission surface 81 of the light emitting device 100, the distribution of light that passes through the first light-blocking portion 451 to the optical film 430 may be improved.

Since the first region R1 of the first light-blocking portion 451 is further arranged on both sides of the second light-blocking portion 452 or the third light-blocking portion 453 in the first direction X and on both sides of the second direction Y, the difference in brightness due to the difference in thickness of the light-blocking portions 451, 452, and 453 may be reduced.

The first region R1 may include a first rear region R11 having a dense pattern, side regions R12 and R13, and a first front region R14 and R15. Here, the front, side regions, and rear may be based on the third light-blocking portion 453. The first rear region R11 is arranged rearward or on one side with respect to a region overlapping with the emission surface 81 of the light emitting device 100, and the first front regions R14 and R15 are arranged forward or on the other side with respect to a region overlapping with the emission surface 81 of the light emitting device 100. Accordingly, the first rear region R11 may be a region on one side with respect to an area of the third light-blocking portion 453 or a region overlapping with the emission surface 81. Accordingly, the first rear region R11 may be one side region of the third light-blocking portion 453, and the first front region R14 and R15 may be the other side region of the third light-blocking portion 453. The first front region R14 and R15 may be divided into a narrow region and a wide region in which at least one of the gaps G1 and G2 in the first and second directions becomes narrower as it moves from the second light-blocking portion 452 toward the third edge 463. Here, the narrow region is a region adjacent to the third light-blocking portion 453 and may have a gap G1 and G2 that is narrower than the gaps G1 and G2 of the wide region.

The size of each of the first patterns P1 of the first region R1 of the first light-blocking portion 451 may be larger than the size or area of each of the first patterns P1 of the second region R2. The gap G1 and G2 between the first patterns P1 of the first region R1 may be larger than the gap G1 and G2 between the first patterns P1 of the second region R2. The gap G1 and G2 may include a gap G1 spaced apart in the second direction Y and a gap G2 spaced apart in the first direction X. The gap G1 and G2 between the first patterns P1 of the first and second regions R1 and R2 of the first light-blocking portion 451 may gradually increase as the distance from the emission surface 81 of the light emitting device 100 increases. The size or area of each of the first patterns P1 of the first region R1 may gradually decrease as the distance from the emission surface 81 of the light emitting device 100 increases. The gradually decreasing or increasing shape may include a shape in which the patterns include M rows and/or N columns (M, N are 1 to 4) of the same size, and the patterns thereafter become smaller or larger.

In the light-blocking member 450, the second light-blocking portion 452 is provided in the form of a thin solid line (see FIGS. 3 and 4) and may be arranged on both sides of the first direction X of the third light-blocking portion 453. The first of the second light-blocking portion 452 may be arranged on both sides of the first direction X of the third light-blocking portion 453. The length B4 of the second light-blocking portion 452 in the first direction X may be greater than the length B5 of the third light-blocking portion 453. The length B4 of the second light-blocking portion 452 is the distance between the two ends of the second light-blocking portion 452 in the first direction X, and the second light-blocking portion 452 may be arranged between the first region R1 having a dense pattern and the third light-blocking portion 453, so as to gradually alleviate the shading effect. The length of the second light-blocking portion 452 in the second direction Y is equal to or greater than the maximum length C4 of the third light-blocking portion 453, for example, may be equal to it. The length (e.g., C4) of the second light-blocking portion 452 in the second direction Y may be 1.1 times or more, for example, 1.1 to 1.5 times or 1.1 to 1.4 times the length D1 of the light emitting device 100. The length C4 of the second light-blocking portion 452 in the second direction Y may be formed to a size that may cover the large directivity angle of the light emitting device 100 in the second direction Y.

Furthermore, since the intensity of light traveling in both directions in the second direction Y relative to the light emitting device 100 is at least 50% less than the intensity in the first direction X, even if the lengths C4 of the second light-blocking portion 452 and the third light-blocking portion 453 in the second direction Y are set to be the same, a decrease in light-blocking efficiency may be prevented.

The second light-blocking portion 452 may be formed by arranging the second patterns P2 with the largest size or area on both sides of the third light-blocking portion 453 in the first direction. The second pattern P2 of the second light-blocking portion 452 may have a larger size or area than other regions on both sides of the third light-blocking portion 453. The second light-blocking portion 452 may include a second rear region R50, two corner regions R51 and R52, and a second front region R53 and R54. The second rear region R50 is disposed rearward or on one side with respect to a region overlapping with the emission surface 81 of the light emitting device 100, and the second front regions R53 and R54 are disposed forward or on the other side with respect to a region overlapping with the emission surface 81 of the light emitting device 100. Accordingly, the second rear region R50 may be a region on one side with respect to a region of the third light-blocking portion 453 or a region overlapping with the emission surface 81. Accordingly, the first rear region R50 may be located at one side of the third light-blocking portion 453, and the second front regions R53 and R54 may be located at the other side of the third light-blocking portion 453. The second rear region R50 may be located between the first rear region R11 and one side of the third light-blocking portion 453, and the two corner regions R51 and R52 may be located at the two front corners of the third light-blocking portion 453, respectively. The second front regions R53 and R54 may be located between the other side of the third light-blocking portion 453 and the first front regions R14 and R15. The second front region (R53, R54) may be divided into a narrow region and a wide region in which at least one of the gaps G1 and G2 in the first and second directions becomes narrower as it moves from the second light-blocking portion 452 toward the third edge 463. Here, the narrow region is a region adjacent to the third light-blocking portion 453 and may have a gap G1 and G2 that is narrower than the gap G1 and G2 of the wide region.

The length C5 of the second front region R53 and R54 in the second direction Y may be the same as the length of the third light-blocking portion 453. The second rear region R50 may be arranged long along one side or the rear surface of the third light-blocking portion 453, and the second front region R53 and R54 may be arranged long along the other side or the front surface of the third light-blocking portion 453. The second pattern P2 of the second light-blocking portion 452 may be arranged in one or more areas. For example, the second pattern P2 of the second rear region R50 and the inner region R53 of the second front region may be single or formed to have the largest size within the second light-blocking portion 452, and the second pattern P2 of the outer region R54 of the second front region may be formed in multiple regions along the second direction Y. As shown in FIG. 6, FIG. 3, FIG. 4, and FIG. 8, the length of the second light-blocking portion 452 in the second direction Y may be the length of the outer region R54 of the second front region, and may be 80% or more, for example, in the range of 80% to 99%, of the length of the second rear region R50 in the second direction Y.

The second rear region R50 may be in contact with the first light-blocking portion 451. The second rear region R50 may be in contact with the first rear region R11 of the first light-blocking portion 451. Both surfaces of the third light-blocking portion 453 may be in contact with the first light-blocking portion 451, and one side and the other side may be in contact with the second light-blocking portion 452. The outer side surfaces of the second light-blocking portion 452 may be in contact with the first and third light-blocking portions 451 and 453.

The third light-blocking portion 453 may have a third pattern P3 having the largest size among the first to third patterns P1, P2, and P3. The third pattern P3 may be formed as a pattern having a single size. The third pattern P3 may be formed as a single pattern. The third light-blocking portion 453 may include both side protrusion regions R32 and R33 and a front protrusion region R31. The both side protrusion regions R32 and R33 and the front protrusion region R31 may be connected to each other. As shown in FIGS. 3, 4, and 7, the length C4 of the third light-blocking portion 453 in the second direction Y is the distance between the both protrusion regions R32 and R33, may be equal to the length of the second rear region R50, may be the maximum distance between the both corner regions R51 and R52, and may be greater than the length (e.g., C5) of the front protrusion region R31. That is, the length of the third light-blocking portion 453 in the second direction may be greater on the inner side adjacent to the emission surface 81 of the light emitting device 100 than on the outer side. Here, the inner and outer references may be the emission surface 81 of the light emitting device 100. The emission surface 81 of the light emitting device 100 may overlap vertically with the second and third light-blocking portions 452 and 453. The emission surface 81 of the light emitting device 100 may overlap vertically with a light-blocking pattern having a third thickness T3.

The upper surface area of the first light-blocking portion 451 may be 5 times or more, for example, 5 to 12 times, or 6 to 10 times, the upper surface area of the light emitting device 100. The upper surface area of the first light-blocking portion 451 is the upper surface area of an area formed by a virtual line connecting the outer edges of the first patterns P1. The upper or lower surface area of the second light-blocking portion 452 may be 5 times or less, 2 to 5 times, or 2 to 3 times the upper surface area of the light emitting device 100. The upper or lower surface area of the second light-blocking portion 452 is the upper or lower surface area of an area within a virtual line connecting the outer edges of the second patterns P2. Here, the lower or upper surface area of the second light-blocking portion 452 also includes a region overlapping with the third light-blocking portion 453.

The lower surface area of the third light-blocking portion 453 may be 3 times or less, 1.2 to 3 times, or 1.2 to 2.5 times the upper surface area of the light emitting device 100. The upper or lower surface area of the second light-blocking portion 452 is the upper or lower surface area of an area within a virtual line connecting the outer edges of the second patterns P2. The upper surface area of the third light-blocking portion 453 also includes a region vertically overlapping with the second light-blocking portion 452. The lower surface area of the second light-blocking portion 452 may be smaller than the upper surface area of the first light-blocking portion 451 and larger than the lower surface area of the third light-blocking portion 453. If the upper surface area of the first light-blocking portion 451 is the upper surface area of the region connecting the outer lines of the first pattern P1 and is A1, the upper or lower surface area of the second light-blocking portion 452 is the upper or lower surface area of the region connecting the outer lines of the second patterns P1 and is A2, and the lower surface area of the third light-blocking portion 453 is A3, the following conditions may be satisfied.

$$\text{Condition 1: } A3 < A2 < A1$$

$$\text{Condition 2: } 1 < A2/A3 < 1.7$$

Preferably, the condition may satisfy: $1 < A2/A3 \leq 1.5$.

$$\text{Condition 3: } 2 < A1/A3 < 6$$

Preferably, the condition may satisfy: $3.5 < A1/A3 < 5.5$.

$$\text{Condition 4: } 2 < A1/A2 < 4.5$$

Preferably, the condition may satisfy: $2.2 < A1/A2 < 3.2$.

According to Conditions 1-4, the first to third light-blocking portions 451, 452, and 453 can prevent hot spots caused by light emitted through the emission surface 81 of the light emitting device 100 and improve light uniformity. Furthermore, the first to third light-blocking portions 451, 452, and 453 can provide uniform light transmittance, for example, 11% or less, across the entire area, according to Conditions 1-4.

To improve the light-blocking effect of the light-blocking member 450, the overlapping regions of the upper surface of the light emitting device 100 and the first to third light-blocking portions 451, 452, and 453 may satisfy the following conditions: If the upper surface area of the light emitting device 100 is A00, and the area (i.e., the lower surface area) of the first light-blocking portion 451 that vertically overlaps the upper surface of the light emitting device 100 is A01, the area (i.e., the lower surface area) of the second light-blocking portion 452 that vertically overlaps the upper surface of the light emitting device 100 is A02, and the area (i.e., the lower surface area) of the third light-blocking portion 453 that vertically overlaps the upper surface of the light emitting device 100 is A03, the following conditions may be satisfied.

$$\text{Condition 1: } A03 < A02 < A01 < A00$$

$$\text{Condition 2: } 0.1 < A03/A00 \leq 0.2$$

$$\text{Condition 3: } 0.2 < A02/A00 < 0.3$$

$$\text{Condition 4: } 0.6 < A03/A00 < 0.9$$

$$\text{Condition 5: } 5 < A03/A01 < 9$$

$$\text{Condition 6: } 2 < A03/A02 < 4$$

The area where the first to third light-blocking portions 451, 452, and 453 and the light emitting device 100 vertically overlap each other is the area of the overlapping region from the emission surface 81 toward the rear of the light emitting device 100. Since the emission surface 81 of the light emitting device 100 covers a certain region, the upper portion of the emission surface 81 may be covered, and the different thicknesses of the light-blocking portions 451, 452, and 453 can improve the light-blocking effect.

Referring to FIG. 6, the distance E1, E2, and E3 from the straight-line K2 perpendicular to the emission surface 81 of the light emitting device 100 to the ends of the first to third light-blocking portions 451, 452, and 453 in the first direction X may satisfy the following conditions. The distance from the straight-line K2 to the end of the first light-blocking portion 451, i.e., the third edge 463, is E1, the distance from the straight-line K2 to the end of the second light-blocking portion 452 is E2, and the distance from the straight-line K2 to the end of the third light-blocking portion 453 is E3, and the distances E1, E2, and E3 may satisfy the following conditions. Here, the ends of the first to third light-blocking portions 451, 452, and 453 are the ends of each light-blocking portion 451, 452, and 453 spaced apart from each light emitting device 100 in the emission direction or the first direction X.

$$\text{Condition 1: } E3 < E2 < E1$$

$$\text{Condition 2: } 1.6 \text{ mm} < E3 < 2.6 \text{ mm}$$

$$\text{Condition 3: } 2.4 \text{ mm} < E2 < 3.4 \text{ mm}$$

$$\text{Condition 4: } 8.9 \text{ mm} < E1 < 10 \text{ mm} < B3$$

$$\text{Condition 5: } 2 < E1/E2 < 4$$

$$\text{Condition 6: } 1 < E2/E3 < 2$$

$$\text{Condition 7: } 3 < E1/E3 < 5.5$$

According to these conditions 1-7, the first, second, and third light-blocking portions 451, 452, and 453 cover the emission surface 81 of the light emitting device 100 at the above-described distance and with the set thickness, thereby preventing hot spots on the upper and front regions of the emission surface 81 of the light emitting device 100 and improving light uniformity. Furthermore, hot spots may be controlled on the emission surface 81 of the light emitting device 100 according to the conditions 1-7, and the thickness, pattern density, and area of the light-blocking pattern may be optimized for each region by considering light diffusion in the space between two adjacent light emitting devices 100. A straight-line K1 perpendicular to the rear surface of the light emitting device 100 may overlap vertically with the light-transmitting layer 415 and be spaced apart from the light-blocking member 450. The rear surface of the light emitting device 100 is the surface opposite the emission surface 81 and is a surface from which light is not emitted. The light emitting device 100 does not emit light through any side surfaces other than the emission surface 81.

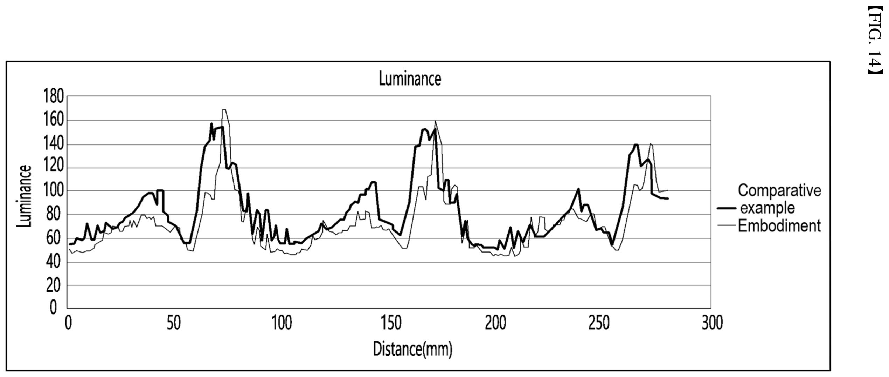

As shown in FIG. 14, the embodiment is an optical film having a light-blocking member printed by the inkjet printing method described above, and the comparative example is a film having a light-blocking member formed using a mask. Comparing the luminance of the comparative example and the embodiment, it may be seen that the luminance distribution of the embodiment is improved by more than 4% by the comparative example. Table 1 below compares the luminance, color coordinate distribution CIEx and CIEy, color uniformity, and luminance change rate of the comparative example and the embodiment.

[Table 1]

| Items | Luminance | CIE x | CIE y | Color uniformity (x) | Color uniformity (y) | Luminance change rate |
|---|---|---|---|---|---|---|
| Comparative example | 1080.4 | 0.675 | 0.321 | 0.014 | 0.014 | - |
| Embodiment | 1132.9 | 0.678 | 0.316 | 0.012 | 0.012 | 5% |

Table 2 compares the luminous flux (lumen) emitted from a light emitting device according to the pattern uniformity of the light-blocking member using the silkscreen method of the comparative example and the inkjet printing method of the exemplary embodiment. The exemplary embodiment shows an improvement of luminous flux of at least 3% compared to the comparative example.

[Table 2]

| Items | Samples | Lumen(lm) | x | y | Rate of change of luminous flux |
|---|---|---|---|---|---|
| Comparative example | 1 | 39.13 | 0.6665 | 0.3202 | - |
| | 2 | 38.81 | 0.6671 | 0.319 | - |

(continued)

| Items | Samples | Lumen(lm) | x | y | Rate of change of luminous flux |
|---|---|---|---|---|---|
| Items | 1 | 40.47 | 0.6684 | 0.3197 | 4% |
| | 2 | 40.13 | 0.6685 | 0.3191 | 3% |

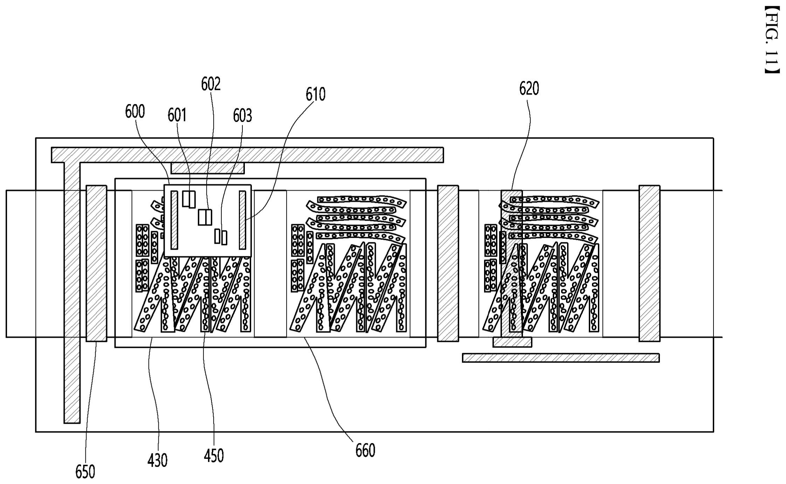

As shown in FIGS. 11 and 12, when a film such as an optical film 430 is supplied to the inkjet printing device, the optical film 430 is pressed by the roller portion 650 to slide inward, and at this time, the inkjet head portion 600 is operated to dispense liquid light-blocking ink through nozzles 601, 602, and 603 in the head portion 600 to form patterns of the light-blocking member 450 disclosed above on one surface of the optical film 430. At this time, UV curing is performed by the first ultraviolet curing device 610. Here, the nozzles 601, 602, and 603 may be nozzles having different dispensing amounts in order to form patterns of different thicknesses in each region of the light-blocking member 450, as shown in (A) of FIG. 9a. As another example, the nozzles 601, 602, and 603 may be nozzles that discharge the same amount of ink, such that each layer of the light-blocking member 450 may be formed with the same thickness, as shown in (B) of FIG. 9a. Then, when the optical film 430 with the cured light-blocking member 450 is moved along the roller portion 650, it is completely cured using the second ultraviolet curing device 620. The light-blocking member 450 formed by cured inkjet printing may be provided as white material patterns with different thicknesses or heights for each region, as shown in FIG. 10a.

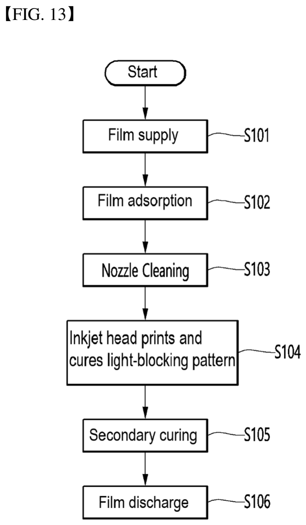

As shown in FIG. 13, the optical film is pressurized and a servo motor is driven to supply the film into the roller unit (S101). To secure the film's position before printing, the film is suctioned (S102). After the ink is purged before printing, nozzle cleaning is performed (S103). Once printing is ready, a light-blocking pattern is printed on the film surface using an inkjet head and primary curing is performed (S 104). Depending on the nozzle type or pattern formation method, the light-blocking member, as shown in (A) and (B) of FIG. 9a, may be selected. After the light-blocking pattern is printed, secondary curing is performed (S105). The primary and secondary curing processes may be performed using an ultraviolet curing device. The film with the light-blocking pattern printed thereon is then discharged (S106), providing an optical film with a light-blocking member formed thereon.

FIG. 15 is a front view illustrating a light emitting device on a substrate in a lighting module according to an embodiment. Referring to FIG. 15, a light-emitting device 100 includes a body 10 having a cavity 20, a plurality of lead frames 30 and 40 within the cavity 20, and a light-emitting chip 71 disposed on at least one of the plurality of lead frames 30 and 40. The light-emitting device 100 may be implemented as a side-emitting package. The body 10 may include a cavity 20 in which lead frames 30 and 40 are exposed at the bottom. The plurality of lead frames 30 and 40 are separated into, for example, a first lead frame 30 and a second lead frame 40 and are coupled to the body 10. The body 10 may be formed of an insulating material. The body 10 may be formed of a reflective material. The body 10 may have a side where the cavity 20 is arranged as an emission region, and the upper surface and other side surfaces may be non-emission surfaces.

The first lead frame 30 includes a first lead portion 31 arranged at the bottom of the cavity 20, a first bonding portion 32 extending to the outside of the body 10, and a first heat dissipation portion 33. The second lead frame 40 includes a second lead portion 41 arranged at the bottom of the cavity 20, a second bonding portion 42 arranged at the outside area of the body 10, and a second heat dissipation portion 43. Here, the light-emitting chips 71 and 72 may be disposed, for example, on the first lead portion 31 of the first lead frame 30, and may be connected to the first and second lead portions 31 and 41 by wires, or may be connected to the first lead portion 31 by adhesive and connected to the second lead portion 41 by wires.

The light-emitting chips 71 and 72 may be disposed one or more within the cavity 20, and emit light with the greatest intensity in the central axis direction. The light-emitting chips may be selected from, for example, a red LED chip, a blue LED chip, a green LED chip, or a yellow-green LED chip. A molding member 80 is disposed within the cavity 20 of the body 10. The molding member 80 comprises a light-transmitting resin such as silicone or epoxy, and may be formed as a single layer or multiple layers. The molding member 80 or the light-emitting chip 71 may include a phosphor for changing the wavelength of the emitted light. The phosphor excites a portion of the light emitted from the light-emitting chip 71 and 72 and emits light of a different wavelength. At least one or more light emitting devices 100 are arranged on the substrate 401, and a reflective member 410 is arranged around the lower perimeter of the light emitting devices 100. The first and second lead portions 33 and 43 of the light emitting devices 100 are bonded to pads 403 and 405 of the substrate 401 using a conductive bonding members 203 and 205, such as solder or conductive tape.

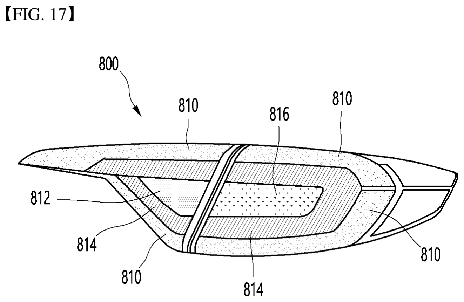

FIG. 16 is a plan view of a vehicle equipped with a vehicle lamp equipped with a lighting module according to an embodiment, and FIG. 17 is a drawing illustrating a vehicle lamp equipped with a lighting module or lighting device disclosed in the embodiment. Referring to FIGS. 16 and 17, a taillight 800 in a vehicle 900 may include a first lamp unit 812, a second lamp unit 814, a third lamp unit 816, and a housing 810. Here, the first lamp unit 812 may be a light source for a turn signal, the second lamp unit 814 may be a light source for a sidelight, and the third lamp unit 816 may be a light source for a brake light, but is not limited thereto. At least one or all of the first to third lamp units 812, 814, and 816 may include a lighting module disclosed in the embodiment. The housing 810 accommodates the first to third lamp units 812, 814, and 816 and may be made of a light-transmitting material. Here, the housing 810 may have a curve depending on the design of the vehicle body, and the first to third lamp units 812, 814, and 816 may implement a surface light source with a curved surface depending on the shape of the housing 810. Such a vehicle lamp may be applied to a vehicle's taillight, brake light, or turn signal lamp, if the lamp unit is applied to the vehicle's taillight, brake light, or turn signal lamp.

Features, structures, effects, and the like described in the embodiments are included in at least one embodiment of the invention, and are not necessarily limited to only one embodiment. Furthermore, the features, structures, effects, and the like illustrated in each embodiment may be combined or modified for other embodiments by a person having ordinary knowledge in the field to which the embodiments belong. Accordingly, contents related to such combinations and modifications should be construed as being included in the scope of the invention. In addition, although the examples have been described above, these are only examples and do not limit the invention, and those of ordinary skill in the field to which the invention pertains are illustrated above within the scope not departing from the essential characteristics of the present embodiment. It will be seen that various modifications and applications that have not been made are possible. For example, each component specifically shown in the embodiment may be modified and implemented. And differences related to these modifications and applications should be construed as being included in the scope of the invention defined in the appended claims.

**Claims**

1.  An optical plate comprising:

    an optical film having a diffuser; and
    a light-blocking member disposed on an upper or lower surface of the optical film,
    wherein the light-blocking member includes a first light-blocking portion having a first pattern having a first thickness in a vertical direction, a second light-blocking portion having a second pattern having a second thickness thicker than the first thickness, and a third light-blocking portion having a third pattern having a third thickness thicker than the second thickness,
    wherein the first to third light-blocking portions do not overlap each other in the vertical direction,
    wherein the first pattern of the first light-blocking portion has a pattern of a largest size within the first pattern arranged around the second and third light-blocking portions,
    wherein the second pattern of the second light-blocking portion has a pattern of a largest size within the second pattern arranged on both sides of the third light-blocking portion in the first direction,
    wherein the third pattern of the third light-blocking portion has a single size pattern adjacent to one side of the light blocking member,
    wherein an upper surface area of a region connecting outer lines of the first patterns of the first light-blocking portion is A1,
    wherein an upper or lower surface area of a region connecting outer lines of the second patterns of the second light-blocking portion is A2,
    wherein a lower surface area of the third light-blocking portion is A3, and
    wherein the following conditions satisfy:

    $$\text{Condition 1: } A3 < A2 < A1$$

    $$\text{Condition 2: } 1 < A2/A3 < 1.7.$$

2.  The optical plate of claim 1, wherein the following Condition 3 satisfies: $2 < A1/A3 < 6$.

3.  The optical plate of claim 1, wherein the following Condition 4 satisfies: $2 < A1/A2 < 4.5$.

4.  The optical plate of any one of claims 1 to 3,
    wherein the light-blocking member comprises:

    a first edge having a long length in a second direction perpendicular to the first direction;
    a third edge located opposite the first edge and arranged with the first pattern in the second direction; and
    a second edge in which the first pattern is arranged in a convex shape protruding in both directions from both ends of the first edge and both ends of the third edge.

5. The optical plate of claim 4,

   wherein the second light-blocking portion includes a rear region disposed between the first edge of the first light-blocking portion and the third light-blocking portion, corner regions disposed at both front corners of the third light-blocking portion, and a front region disposed in front of the third light-blocking portion,
   wherein the rear region is disposed longitudinally along one side or a rear surface of the third light-blocking portion, and
   wherein the front region is disposed longitudinally along the other side or a front surface of the third light-blocking portion.

6. The optical plate of claim 4,

   wherein an outer side surface of the second light-blocking portion contacts the first light-blocking portion,
   wherein an outer side surface of the third light-blocking portion contacts the first and second light-blocking portions,
   wherein the third thickness is 2.5 to 5 times the first thickness, and
   wherein the third thickness is 100 $\mu$m to 200 $\mu$m.

7. A lighting device comprising:

   a substrate;
   a plurality of light emitting devices disposed on the substrate and electrically connected to the substrate;
   a resin layer covering the plurality of light emitting devices on the substrate;
   an optical film disposed on the resin layer; and
   a plurality of light-blocking members disposed on an upper or lower surface of the optical film and at least a portion of which vertically overlaps each of the plurality of light emitting devices,
   wherein each of the plurality of light emitting devices includes an emission surface on one side that emits light in a first direction,
   wherein each of the plurality of light-blocking members includes a first light-blocking portion having a first pattern of a first thickness, a second light-blocking portion having a second pattern of a second thickness greater than the first thickness, and a third light-blocking portion having a third pattern of a third thickness greater than the second thickness,
   wherein the first to third light-blocking portions overlap the upper surface of each of the light emitting devices in the vertical direction,
   wherein the first pattern of the first light blocking portion has a pattern of a largest size within the first pattern arranged around the second and third light blocking portions,
   wherein the second pattern of the second light blocking portion has a pattern of a largest size within the second pattern arranged on both sides of the third light blocking portion in the first direction
   wherein the third pattern of the third light-blocking portion has a single size pattern having a length longer than a length of each of the light emitting devices in the second direction,
   wherein an upper surface area of each light emitting device is A00,
   wherein a lower surface area of the first light-blocking portion that vertically overlaps the upper surface of each light emitting device is A01,
   wherein a lower surface area of the second light-blocking portion that vertically overlaps the upper surface of each light emitting device is A02,
   wherein a lower surface area of the third light-blocking portion that vertically overlaps the upper surface of each light emitting device is A03,
   wherein the following condition satisfy:

$$\text{Condition 1: A03} < \text{A02} < \text{A01} < \text{A00}$$

$$\text{Condition 2: 0.1} < \text{A03/A00} \leq 0.2$$

$$\text{Condition 3: 0.2} < \text{A02/A00} < 0.3.$$

8. The lighting device of claim 7,
wherein the following Condition 4 satisfies: 0.6 < A03/A00 < 0.9.

9. The lighting device according to claim 7,
wherein the following Condition 5 satisfies: 5 < A03/A01 < 9.

10. The lighting device according to claim 7,
wherein the following Condition 6 satisfies: 2 < A03/A02 < 4.

11. The lighting device according to any one of claims 7 to 10,

wherein an upper surface area of a region connecting outer lines of the first pattern of the first light-blocking portion is A1,
wherein an upper or lower surface area of a region connecting outer lines of the second pattern of the second light-blocking portion is A2,
wherein the following conditions satisfies:

$$\text{Condition 7: } 1 < A2/A03 < 1.7,$$

$$\text{Condition 8: } 2 < A1/A03 < 6.$$

12. The lighting device according to any one of claims 7 to 10, wherein:

wherein a distance from a straight-line perpendicular to the emission surface of each light emitting device in the first direction to an end of the first light-blocking portion is E1, a distance to an end of the second light-blocking portion is E2, and a distance to an end of the third light-blocking portion is E3, and
wherein the following conditions satisfies:

$$\text{Condition 10: } E3 < E2 < E1$$

$$\text{Condition 11: } 1.6 \text{ mm} < E3 < 2.6 \text{ mm}$$

$$\text{Condition 12: } 1 < E2/E3 < 2.$$

13. A vehicle lamp comprising:

a lamp having a lighting device,
wherein the lighting device is a lighting device of any one of claims 7 to 10, and
wherein the lamp comprises at least one of a side mirror lamp, a side lamp, a fog lamp, a tail lamp, a brake lamp, a daytime running lamp, a vehicle interior light, a door scarf, a rear combination lamp, or a backup lamp.

【FIG. 1a】

【FIG. 1b】

【FIG. 2】

【FIG. 3】

【FIG. 4】

450
451(R1(R11-R16), R2)
452(R51-R54)
453(R31-R33)

【FIG. 5】

【FIG. 6】

【FIG. 7】

【FIG. 8】

【FIG. 9a】

(A)

(B)

【FIG. 9b】

【FIG. 10a】

【FIG. 10b】

(A)　　　　　　　　　　　　　　　　　(B)

【FIG. 11】

【FIG. 12】

(A)　　　　　　　(B)

【FIG. 13】

```
                    ┌──────────┐
                    │  Start   │
                    └──────────┘
                         │
                         ▼
              ┌──────────────────┐
              │   Film supply    │────S101
              └──────────────────┘
                         │
                         ▼
              ┌──────────────────┐
              │  Film adsorption │────S102
              └──────────────────┘
                         │
                         ▼
              ┌──────────────────┐
              │  Nozzle Cleaning │────S103
              └──────────────────┘
                         │
                         ▼
          ┌──────────────────────────┐
          │ Inkjet head prints and   │────S104
          │ cures light-blocking pattern │
          └──────────────────────────┘
                         │
                         ▼
              ┌──────────────────┐
              │ Secondary curing │────S105
              └──────────────────┘
                         │
                         ▼
              ┌──────────────────┐
              │  Film discharge  │────S106
              └──────────────────┘
```

【FIG. 14】

【FIG. 15】

【FIG. 16】

【FIG. 17】

## INTERNATIONAL SEARCH REPORT

| International application No. |
|---|
| **PCT/KR2024/006601** |

### A. CLASSIFICATION OF SUBJECT MATTER

**F21S 43/20**(2018.01)i; **F21S 43/14**(2018.01)i; **F21V 11/00**(2006.01)i; **H05B 33/14**(2006.01)i; **H05B 33/20**(2006.01)i; **G02B 5/00**(2006.01)i; **F21Y 115/10**(2016.01)i

According to International Patent Classification (IPC) or to both national classification and IPC

### B. FIELDS SEARCHED

Minimum documentation searched (classification system followed by classification symbols)

F21S 43/20(2018.01); F21K 9/20(2016.01); F21S 41/148(2018.01); F21S 41/365(2018.01); F21S 41/40(2018.01); F21V 3/04(2006.01); F21V 7/04(2006.01); F21V 8/00(2006.01); F21Y 115/10(2016.01); G02B 6/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 광학 플레이트(optical plate), 조명 장치(lighting device), 차량 램프(vehicle lamp), 광원 모듈(light source module), 발광(light emitting)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0122027 A (LG INNOTEK CO., LTD.) 02 September 2022 (2022-09-02)<br>See paragraphs [0079]-[0087], [0100]-[0119] and [0135]-[0136]; and figures 8-9 and 15-16. | 1-13 |
| Y | KR 10-2022-0137416 A (LG INNOTEK CO., LTD.) 12 October 2022 (2022-10-12)<br>See paragraphs [0058]-[0063]; and figures 5-6. | 1-13 |
| A | KR 10-2019-0049663 A (LG INNOTEK CO., LTD.) 09 May 2019 (2019-05-09)<br>See paragraphs [0079]-[0080]; and figure 15. | 1-13 |
| A | KR 10-2023-0041544 A (LG INNOTEK CO., LTD.) 24 March 2023 (2023-03-24)<br>See entire document. | 1-13 |
| A | WO 2022-045713 A1 (LG INNOTEK CO., LTD.) 03 March 2022 (2022-03-03)<br>See entire document. | 1-13 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **27 August 2024** | **28 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/006601**

| Patent document cited in search report | | | Publication date (day/month/year) | Patent family member(s) | | | Publication date (day/month/year) |
|---|---|---|---|---|---|---|---|
| KR | 10-2022-0122027 | A | 02 September 2022 | CN | 116941054 | A | 24 October 2023 |
| | | | | EP | 4300607 | A1 | 03 January 2024 |
| | | | | JP | 2024-507538 | A | 20 February 2024 |
| | | | | WO | 2022-182189 | A1 | 01 September 2022 |
| KR | 10-2022-0137416 | A | 12 October 2022 | KR | 10-2022-0137406 | A | 12 October 2022 |
| | | | | WO | 2022-211442 | A1 | 06 October 2022 |
| KR | 10-2019-0049663 | A | 09 May 2019 | KR | 10-2001953 | B1 | 29 July 2019 |
| KR | 10-2023-0041544 | A | 24 March 2023 | CN | 117980656 | A | 03 May 2024 |
| | | | | WO | 2023-043253 | A1 | 23 March 2023 |
| WO | 2022-045713 | A1 | 03 March 2022 | CN | 115989440 | A | 18 April 2023 |
| | | | | EP | 4206525 | A1 | 05 July 2023 |
| | | | | JP | 2023-539207 | A | 13 September 2023 |
| | | | | KR | 10-2022-0026137 | A | 04 March 2022 |
| | | | | US | 2023-0358384 | A1 | 09 November 2023 |

Form PCT/ISA/210 (patent family annex) (July 2022)